(19) Europäisches Patentamt
European Patent Office
Office européen des brevets

(11) Publication number: **0 435 356 B1**

(12) # EUROPEAN PATENT SPECIFICATION

(45) Date of publication of patent specification: **09.11.94**

(51) Int. Cl.5: **C09D 163/00**, C09D 7/12

(21) Application number: **90125798.0**

(22) Date of filing: **29.12.90**

(54) **Thermosetting coating composition and pigmented film formation.**

(30) Priority: **29.12.89 JP 342740/89
10.05.90 JP 118537/90
10.05.90 JP 118538/90
14.09.90 JP 245231/90
27.09.90 JP 255200/90
27.09.90 JP 258410/90
02.11.90 JP 298107/90**

(43) Date of publication of application:
**03.07.91 Bulletin 91/27**

(45) Publication of the grant of the patent:
**09.11.94 Bulletin 94/45**

(84) Designated Contracting States:
**DE FR GB**

(56) References cited:
**GB-A- 2 202 538
GB-A- 2 212 164**

**DATABASE WPIL, no. 88-260 86, DERWENT PUBLICATIONS LTD., London, GB; & JP-A-63 189 427**

**DATABASE WPIL, no. 88-185 243, DERWENT PUBLICATIONS LTD., London, GB; & JP-A-63 120 727**

(73) Proprietor: **KANSAI PAINT CO. LTD.
33-1, Kanzaki-cho
Amagasaki-shi Hyogo-ken (JP)**

(72) Inventor: **Tominaga, Akira
22-18, Matukazedai
Chigasaki-shi, Kanagawa-ken (JP)**
Inventor: **Nishida, Reiziro
534-34, Kagawa
Chigasaki-shi, Kanagawa-ken (JP)**
Inventor: **Inoue, Hiroshi
7-305, 60-1, Yamashita
Hiratuka-shi, Kanagawa-ken (JP)**
Inventor: **Yabuta, Motoshi
E-203, 882-1, Turumaki
Hatano-shi, Kanagawa-ken (JP)**
Inventor: **Sasaki, Yoshio
2-3-2, Ishikamidai,
Ohiso-cho
Nakagouri, Kanagawa-ken (JP)**
Inventor: **Kasari, Akira
3269-46, Okazaki
Hiratuka-shi,Kanagawa-ken (JP)**
Inventor: **Igarashi, Hiroshi
603, Yoshida-cho,
Totuka-ku
Yokohama-shi, Kanagawa-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

Inventor: **Ozaki, Tohru**
**4-13-12, Higashi Yawata**
**Hiratsuka-shi,Kanagawa-ken (JP)**

(74) Representative: **Kraus, Walter, Dr. et al**
**Patentanwälte Kraus, Weisert & Partner**
**Thomas-Wimmer-Ring 15**
**D-80539 München (DE)**

## Description

The present invention relates to a novel thermosetting coating composition.

As thermosetting coating composition, there has heretofore been known paints composed of a resin composition including a hydroxyl group-containing resin and an aminoaldehyde resin dissolved or dispersed in an organic solvent. However, this type of thermosetting coating compositions are disadvantageous in that not only they must be baked at temperatures over 180 °C but also films formed therefrom have poor chemical characteristics such as corrosion resistance and acid resistance. In addition, problems of bubbling of coating films due to condensates (formaldehyde or the like) formed upon the baking and of environmental pollution remain to be solved. Those paints obtained by substituting the aminoaldehyde resins in the above-described conventional paints by bisphenol/epichlorohydrin type epoxy resins suffer from increase in viscosity or gelling during their storage, resulting in that they fail to give practically acceptable thermosetting coating compositions.

Overcoat coating films, particularly those for automobiles currently used are thermoplastic acrylic resin/melamine resin system, thermoplastic polyester resin/melamine resin system, and the like. These paints have various disadvantages. Thus, smoothness cannot be further improved, and their curing characteristics are insufficient.

Previously, we proposed a coating composition for automobiles which has excellent low temperature curing characteristics in Japanese Laid-Open Patent Publication 160879/1990. This coating composition is a silicone type coating composition obtained by blending a copolymer composed of a polysiloxane type macromonomer having a silanol group and/or an alkoxysilane group and a vinyl monomer having an oxirane group as monomer components with a metal chelate compound. When the coating composition is applied to both a metallic base coat (i.e., a blend of a paint with aluminum flake pigment) and a clear top coat and coating is finished by a two-coat-one-bake method, the resulting coating film fails to exhibit aluminum luster (i.e., being brilliant and white) because the metallic base coat is corroded by the clear top coat and the orientation of the aluminum flake pigment is altered. Further, a coating composition containing a thermosetting acrylic or polyester resin/melamine resin type resin composition as a metallic base coat is disadvantageous that curing of the clear top coat starts before curing of the metallic base coat begins, resulting in that defects such as bubbling, shrink and the like occur in the resulting coating films.

GB-A-2 202 538 relates to a coating composition for which a base resin is used which is a vinyl copolymer prepared from a polysiloxane macromonomer and an epoxy-containing vinyl monomer containing at least no carboxyl groups. According to this invention, a base resin (a) is used which contains both hydroxyl and carboxyl groups. The base resin used in the present invention is clearly distinguishable from the base resin of GB-A-2 202 538.

JP-A-63 189 427 discloses a coating composition comprising (a) an epoxy resin containing no aromatics in repeat units, (b) an alkylphenyl polysiloxane of the general formula $R_a{}^1Si(OR^2)_b0_{(4-a-b)/2,}$ (c) an aluminum chelate compound, and (d) an alkoxyboron compound.

The coating composition of this invention differs from the coating composition as described in JP-A-63 189 427 in such a way that the base resin according to this invention comprises both hydroxyl and carboxyl groups. The base resin used in JP-A-63 189 427 is a resin derived from an epoxy resin and an alkylphenylpolysiloxane.

The coating compositions known from the prior art have the disadvantage that the adhesion between the films prepared from these coating compositions and a top coat are insufficient.

This invention relates to a thermosetting coating composition comprising as essential components:

(a) a hydroxyl group-containing base resin containing both hydroxyl and carboxyl groups with an acid value in the range of 1 to 100, a hydroxyl value in the range of 10 to 500 and a number average molecular weight in the range of 1,000 to 100,000,

(b) an alicyclic polyepoxide crosslinking agent which is a polyepoxy compound having an alicyclic hydrocarbon ring, and having at least two per molecule of an epoxy group present on the alicyclic hydrocarbon ring and/or of an epoxy group directly bonded to a carbon atom constituting the alicyclic hydrocarbon ring,

wherein said base resin (a) is present in an amount of 40 to 97 % by weight and said alicyclic polyepoxide crosslinking agent (b) is present in an amount of 3 to 60 % by weight based on the sum of said base resin (a) and said crosslinking agent (b), and

(c) a catalyst selected from the group consisting of a quaternary ammonium hydroxide which is a compound represented by formula:

$$[R_{10}R_{11}R_{12}R_{13}N]^{\oplus}\ OH^{\ominus}$$

wherein $R_{10}$, $R_{11}$, $R_{12}$ and $R_{13}$, which are the same or different, each represent a $C_1$-$C_{18}$-alkyl group, a $C_3$-$C_7$-cycloalkyl group, an aryl group or an aralkyl group,

wherein said catalyst (c) is contained in an amount of 0.01 to 10 parts by weight per 100 parts by weight of the sum of said base resin (a) and said alicyclic polyepoxide crosslinking agent (b).

The thermosetting coating composition of the present invention has a feature that the reaction between the hydroxyl group in the base resin (a) and the alicyclic epoxy group in the crosslinking agent (b) and the reaction between the alicyclic epoxy groups themselves in the crosslinking agent (b) substantially do not proceed at about room temperature in the presence of the catalyst (c), namely the quaternary ammonium hydroxide, but the reactions between the functional groups proceed abruptly by baking it at a relatively low temperature, for example, 100°C. Therefore, the coating composition of the present invention is excellent in storage stability and low temperature curing characteristics.

Because the above-described reactions are ionic reactions, there is no fear of the occurrence of by-products unlike the condensation reaction between hydroxyl groups and amino groups in the conventional coating composition containing a hydroxyl group-containing resin and an aminoaldehyde resin. Therefore, coating films formed using the coating composition of the present invention have excellent decorative properties as well as superior physical and chemical properties without any defects such as bubbling and shrink of the coating film.

In the process of forming a pigmented coating film, the above-described thermosetting coating composition of the invention is used as a coating composition for a base coat to form a base coat, and then a coating composition for a clear top coat comprising a base resin having a hydrolytic group directly bonded to a silicon atom and/or a silanol group, a hydroxyl group and epoxy group and a curing catalyst is coated on the resulting base coat to form a clear top coat on the surface of the base coat. The process of forming a pigmented coating film can give rise to multi-layer coating films which have excellent properties as follows.

(1) In a two-coat-one-bake coating system, there is no fear of altering pattern control of metal flake or mica powder, or reversion unevenness of metallic coating, in the pigmented base coat due to the coating composition for clear coat, resulting in that multi-layer coating films can be formed which are excellent in decorative properties.

(2) Interphase adhesion between the pigmented base coat and the clear top coat is excellent. As a result, multi-layer coating films can be formed which has excellent recoating property and is suitable for two-coat-two-bake coating system and the like.

(3) Because no bubbling nor shrink occurs upon curing, multi-layer coating films can be formed which have excellent finished appearance.

Hereafter, the coating composition according to the present invention will be explained in greater detail.

<u>Hydroxyl group-containing basic resin (a):</u>

The hydroxyl group-containing base resin (a) in the thermosetting coating composition of the invention is not limited particularly and any resin may be used that is known in the field of coating composition such as those based on vinyl type resins, polyester type resins and polyether type resins. Representative examples of such resins include the following:

(1) As the hydroxyl group-containing vinyl type resin, there can be cited, for example, polymers obtained by (co)polymerizing at least one of hydroxyl group-containing monomer such as hydroxyethyl (meth)-acrylate, hydroxypropyl (meth)acrylate, hydroxybutyl (meth)acrylate, polycaprolactonediol mono(meth)-acrylate and polyoxyethylene glycol (meth)acrylate; and optionally one or more of other radical polymerizable unsaturated group-containing monomer having no functional group that reacts with a hydroxyl group, such as methyl (meth)acrylate, ethyl (meth)acrylate, isopropyl (meth)acrylate, n-butyl (meth)-acrylate, 2-ethylhexyl (meth)acrylate, acrylonitrile, acrylamide, styrene, vinyltoluene, vinyl acetate, isopropyl vinyl ether, n-butyl vinyl ether or methoxyethyl vinyl ether.

(2) As the hydroxyl group-containing polyester type resin, there can be cited, for example, hydroxyl group-containing polyester resins obtained by condensation of a polyol component such as trimethylolethane, trimethylolpropane, pentaerythritol, glycerol, ethylene glycol, propylene glycol, 1,3-butylene glycol, neopentyl glycol or 1,6-hexanediol with a polycarboxylic acid component such as phthalic acid (anhydride), isophthalic acid, tetrahydrophthalic acid, hexahydrophthalic acid, adipic acid or trimellitic acid (anhydride); hydroxyl group-containing modified polyester type resins obtained by modifying the above polyester resins with a fatty acid or an epoxy resin; and hydroxyl group-containing modified polyester resins obtained by grafting a (meth)acrylic type monomer on the above polyester

resins; esterified resins obtained by modifying bisphenol/epichlorohydrin type epoxy resins with a fatty acid or the like; etc.

(3) As the hydroxyl group-containing polyester type resin which can be used suitably, there can be cited, for example, those resins obtained by polymerizing bisphenol/epichlorohydrin type epoxy resins in the presence of a catalyst.

Among various resins used as the above hydroxyl group-containing base resin (a), the hydroxyl group-containing vinyl type resins obtained by (co)polymerizing at least one of hydroxyl group-containing monomers and optionally one or more of other monomers referred to in (1) above are particularly preferred because they give coating films which are excellent in decorative properties, weatherability and the like.

The hydroxyl group-containing base resin (a) has a hydroxyl value of generally in the range of 10 to 500, preferably 20 to 200. If the hydroxyl value is less than 10, there are observed tendencies that the curability of coating film decreases and performances of coating film such as hardness and flexing resistance also decrease. On the other hand, if the hydroxyl value exceeds 500, performances of coating film such as water resistance and corrosion resistance tend to decrease. Therefore, it is undesirable that the resins have hydroxyl value outside the above-mentioned range.

It is advantageous to use a base resin having a carboxyl group in addition to a hydroxyl group as the above hydroxyl group-containing base resin (a) in the coating composition of the present invention not only because in this case the base resin can be dissolved or dispersed in water to make it possible to produce an aqueous coating composition, but also because reaction between the carboxyl group and the epoxy group in the crosslinking agent (b) and reaction between the resulting hydroxyl group and the epoxy group occur at the same time, which make it possible to form coating films having high crosslinking densities, resulting in that coating films can be obtained which have excellent chemical and physical properties.

As the base resin having both hydroxyl and carboxyl groups, there can be used, for example, those resins based on vinyl type resins, polyester type resins, polyether type resins and the like. Representative examples of such resins include the following:

(1) As the vinyl type resins, there can be cited, for example, those polymers which can be obtained by copolymerizing at least one of the above-described hydroxyl group-containing monomers, at least one of carboxyl group-containing monomers such as acrylic acid, methacrylic acid, 2-carboxyethyl acrylate, 2-carboxyethyl methacrylate, 2-carboxypropyl acrylate, 2-carboxypropyl methacrylate, maleic acid, itaconic acid and fumaric acid, and optionally one or more of the above-described other radical polymerizable unsaturated monomers;

(2) As the polyester type resins, there can be cited, for example, those polyesters which can be obtained by condensing the above-described polyol component with the above-described polycarboxylic acid component so that the resulting polyester can contain both hydroxyl and carboxyl groups, modified resins which can be obtained by modifying the thus-obtained polyester resin with a fatty acid, an epoxy resin or an acrylic resin, those resins which can be obtained by addition-polymerizing an acid anhydride such as maleic anhydride to an esterified product obtained by modifying a bisphenol/epichlorohydrin type epoxy resin with a fatty acid; and

(3) As the polyether type resins, there can be used those resins which can be obtained by reacting a bisphenol/epichlorohydrin type epoxy resin with a polycarboxylic acid such as maleic anhydride or maleic anhydride.

Among the above-described base resins having both hydroxyl and carboxyl group, the vinyl type resin containing both hydroxyl and carboxyl groups referred to in (1) above are particularly preferred because they can give rise to coating films which are excellent in their decorative properties and weatherability.

The base resins having both hydroxyl and carboxyl groups have an acid value in the range of generally 1 to 100, preferably 10 to 80 and a hydroxyl value of generally 10 to 500, preferably 20 to 200. If the acid value is less than 1, there is a fear that the adherability of the resulting coating film would decrease, thus aggravating the corrosion resistance, flexing resistance, weatherability and the like of the coating film. On the hand, if the acid value exceeds 100, the coating composition tends to have poor storage stability and the resulting coating film tends to be poor in water resistance and the like. Therefore, it is undesirable that the acid value be outside the above range. Also, the hydroxyl value outside the above range is undesirable because if the hydroxyl value is less than 10, the resulting coating film tends to have a decreased curability and performances of coating film such as hardness and flexing resistance tend to decrease while if the hydroxyl value exceeds 500, performances of coating film such as water resistance and corrosion resistance tend to decrease.

Further, in the case where an aqueous coating composition is prepared using the base resin having both hydroxyl and carboxyl groups, if the acid value of the base resin is less than 1, it is difficult to obtain an aqueous composition while if the acid value exceeds 100, the resulting aqueous coating composition has

a decreased storage stability and the coating film formed therefrom has poor performance such as decreased corrosion resistance. Therefore, the acid value outside the above range is undesirable.

The above-described base resin (a) have a number average molecular weight in the range of generally 1,000 to 100,000, preferably 2,000 to 80,000, and a softenning temperature in the range of generally no higher than 130 ° C, preferably no higher than 115 ° C. If the number average molecular weight is less than 1,000, performances of coating film such as hardness, flexing resistance and corrosion resistance tend to decrease while it exceeds 100,000, there is observed a tendency that the appearance of coating film such as smoothness is aggravated. On the other hand, if the softenning temperature exceeds 130 ° C, the appearance of coating film such as smoothness tends to be aggravated.

Further, the base resin (a) may have other functional groups such as a phenolic hydroxyl group in addition to the above-described hydroxyl and carboxyl groups, if desired. There is no limitation as to how to introduce the other functional groups than hydroxyl and carboxyl groups and any process known per se can be used. For example, phenolic hydroxyl groups can be introduced by carrying out the copolymerization using bisphenol-modified (meth)acrylates as the monomer component for the above-described vinyl type resins.

Alicyclic polyepoxide crosslinking agent (b):

The alicyclic polyepoxide crosslinking agent (b) which can be used advantageously in the thermosetting coating composition of the invention includes a polyepoxy compound having at least two per molecule of epoxy groups selected from an epoxy group present on an alicyclic hydrocarbon ring and/or an epoxy group directly bonded to a carbon atom constituting an alicyclic hydrocarbon ring. The alicyclic hydrocarbon ring may be of a small member such as 3-membered to 7-membered or more. The ring may be monocyclic or polycyclic. Further, the ring may be a bridged hydrocarbon ring. The epoxy group present on an alicyclic hydrocarbon ring includes, for example, a group represented by formula:

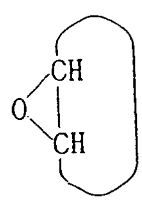

and examples of the epoxy group directly bonded to a carbon atom constituting an alicyclic hydrocarbon ring include a group represented by formula:

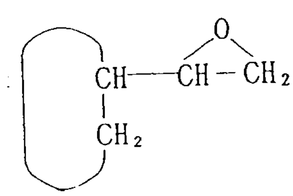

As the alicyclic polyepoxide crosslinking agent (b), there can be used those which are commercially available, and specific examples of such alicyclic polyepoxide crosslinking agent include the following compounds:

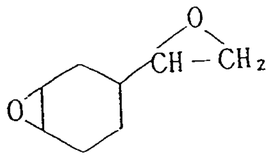,
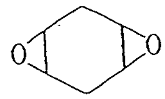,

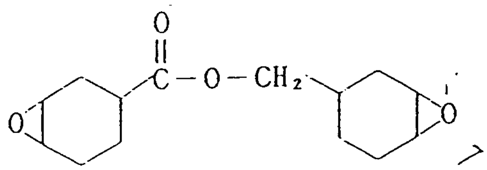,
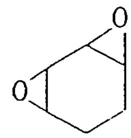,

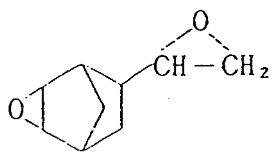,
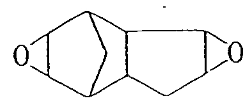,

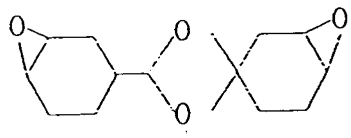
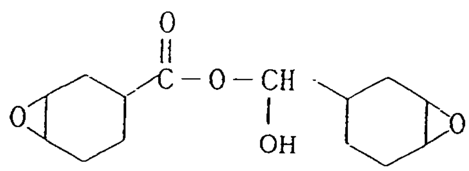

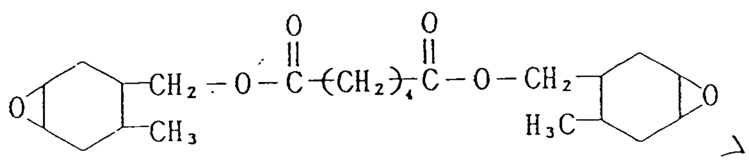,

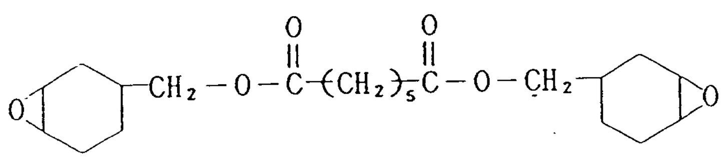,

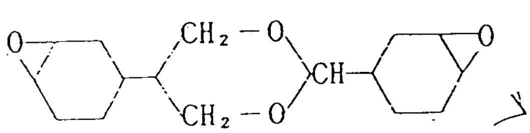,
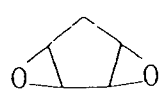,

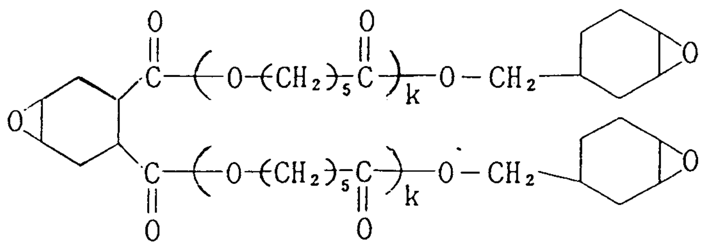

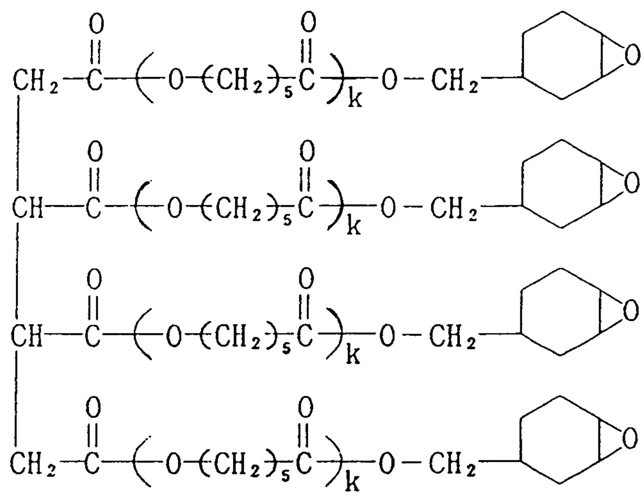

(wherein k is 0 or an integer of 1 to 15)

Also, those compounds having repeating units represented, for example, by formulae (1), (2) and (3) below, respectively, can be used as the alicylic polyepoxide crosslinking agent.

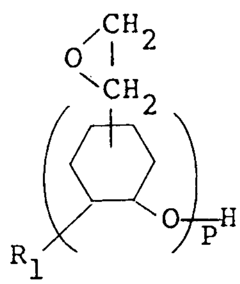

(1)

wherein $R_1$ is an organic residue having an active hydrogen, and p is 2 to 100;

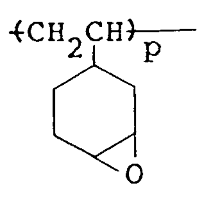

(2)

wherein p has the same meaning as defined above;

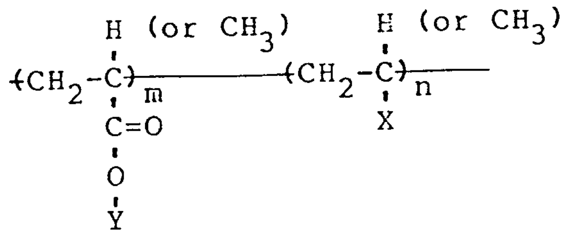 (3)

wherein Y is an alicyclic epoxy residue, X is

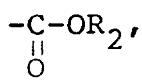,

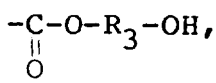, 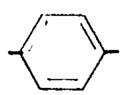, 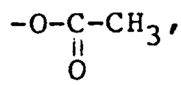,

or $-O-R_2$; $R_2$ is a $C_{1-18}$-alkyl group or a cycloalkyl group; $R_3$ is a $C_{1-6}$ alkylene group; n is 0 to 100; and m is 5 to 100.

The alicyclic epoxy residue (Y) in the above-described repeating unit represented by formula (3) includes, for example, organic groups having alicyclic epoxy groups such as

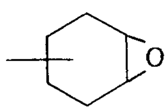 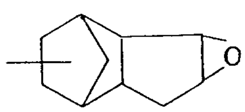 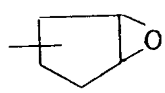 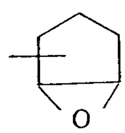 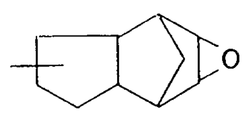

respectively.

The "$C_{1-18}$-alkyl group" represented by X may be of a straight chain or branched type and specific examples thereof include methyl, ethyl, n-propyl, isopropyl, n-butyl, isobutyl, sec-butyl, tert-butyl, n-Pentyl, isopentyl, neopentyl, n-hexyl, n-heptyl, n-octyl, 2-ethylhexyl, n-nonyl, n-decyl, n-dodecyl, n-tridecyl, n-tetradecyl, n-hexadecyl, n-octadecyl, etc. groups. The "cycloalkyl group" represented by X may contain generally 3 to 7 carbon atoms and specific examples thereof include cyclopropyl, cyclobutyl, cyclohexyl, etc. groups.

The "$C_{1-6}$-alkylene group" represented by $R_3$ may be of a straight chain or branched and specific examples thereof include methylene, ethylene, n-propylene, methylethylene, n-butylene, isobutylene, dimethylethylene, etc. groups.

As the compounds having the repeating units (1), (2) and (3), respectively, described above, there can be used those compounds described in Japanese Laid-Open Patent 209667/1989, for example, the following ones.

As the compound having the repeating unit represented by formula (1), there can be cited those compounds prepared by ring opening polymerization of 4-vinylcyclohexene-1-oxide using an organic compound having an active hydrogen to obtain a polycyclohexene oxide ring opening polymerization product and epoxidizing the product with an oxidizing agent such as a peracid or a hydroperoxide. As the organic compound having an active hydrogen used herein, there can be cited, for example, alcohols such as monohydric alcohols, e.g., methanol, ethanol, propanol, pentanol, hexanol, benzyl alcohol and cyclohexanol, and polyhydric alcohols, e.g., ethylene glycol, diethylene glycol, triethylene glycol, propylene glycol, butanediol, pentanediol, hexanediol, neopentyl glycol, glycerol, trimethylolpropane, pentaerythritol and dipentaerythritol; phenols such as phenol, cresol, bisphenol A and bisphenol F; carboxylic acids such as

formic acid, acetic acid, maleic acid, adipic acid, dodecanedioic acid, trimellitic acid, phthalic acid, isophthalic acid and terephthalic acid; and the like.

The above-described ring opening polymerization reaction can be carried out usually in the presence of a catalyst, for example, bases such as ethylamine, propylamine, potassium hydroxide and pyridine; acids such as formic acid, acetic acid, sulfuric acid and hydrochloric acid; alkali metal alcoholates such as sodium methylate; Lewis acids and their complexes such as boron tribromide, zinc chloride and aluminum chloride; organometals such as triethylaluminum at a temperature in the range of generally -70 to 200 °C, preferably -30 °C to 100 °C.

The compound having the repeating unit represented by formula (1) is preferably those which have a number average molecular weight in the range of generally 400 to 10,000, particularly 700 to 50,000.

As the compound having a repeating unit represented by formula (1), there can be cited, for example, EHPE-3150, EHPE-3100 and EHPE-1150 (trademarks for products produced by DAICEL CHEMICAL INDUSTRY CO., LTD.).

As the compound having the repeating unit represented by formula (2), there can be exemplified those compounds obtained by radical polymerization of vinyl 3,4-epoxycyclohexyl. The radical polymerization reaction can be carried out by the same process and under the same conditions as those in the polymerization reaction based on polymerizable unsaturated bonds in ordinary acrylic resins, vinyl resins and the like. As an example of such polymerization reaction, there can be cited a method in which each monomer component is dissolved or dispersed in an organic solvent, and the resulting solution or dispersion is heated in the presence of a radical polymerization initiator at a temperature of 60 to 180 °C while stirring. The reaction time is usually 1 to 10 hours. As the organic solvent, there can be used, for example, alcohol type solvents, ether type solvents, ester type solvents and hydrocarbon type solvents. When the hydrocarbon type solvents are used, it is preferred to use other solvents in combination from the viewpoint of solubility. Any radical polymerization initiators that are usually used may be employed. Specific examples thereof include peroxides such as benzoyl peroxide and t-butyl peroxy-2-ethylhexanoate; azo compounds such as azoisobutyronitrile and azobisdimethylvaleronitrile; and the like.

Examples of the compound having the repeating unit represented by formula (3) include those compounds which can be prepared by radical polymerisation reaction between a compound having at least one alicyclic epoxy group and at least one polymerizable unsaturated group in the same molecule (hereafter, sometimes abbreviated as "polymerizable epoxy monomer") and a compound represented by formula $CH_2=CHX$ or $CH_2=CCH_3X$ wherein X has the same meaning as defined above).

As the "polymerizable epoxy monomer" described above, there can be cited, for example, the following compounds represented by formulae (4) to (15) below.

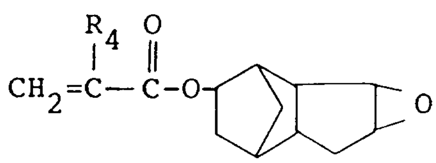

(4)

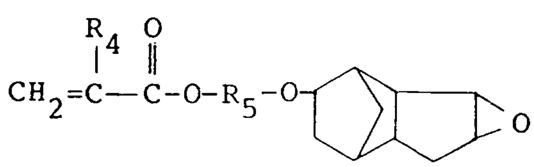

(5)

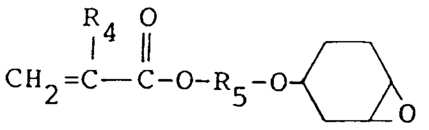

(6)

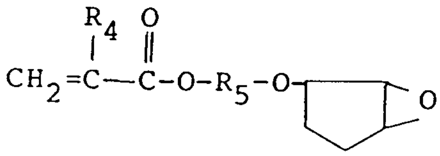

(7)

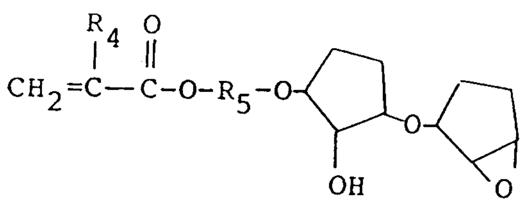

(8)

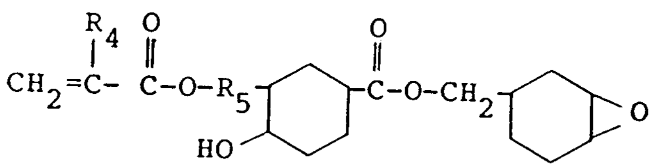

(9)

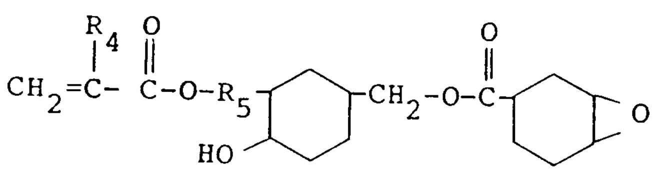

(10)

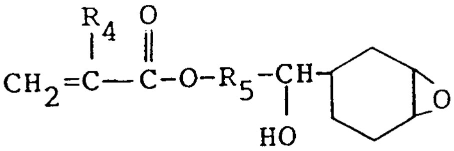

(11)

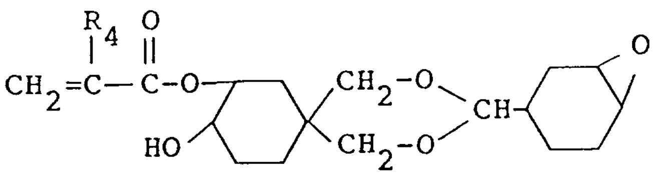

(12)

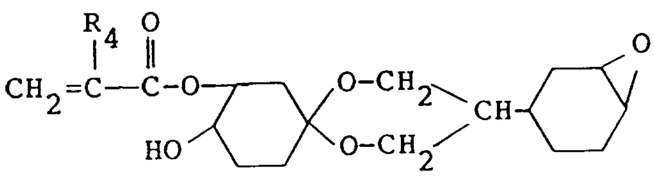

(13)

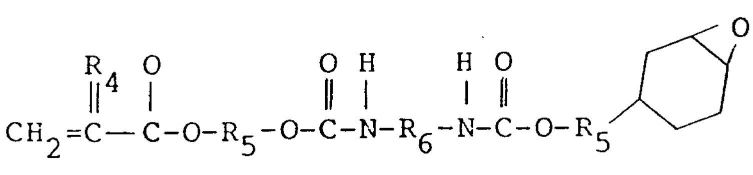

(14)

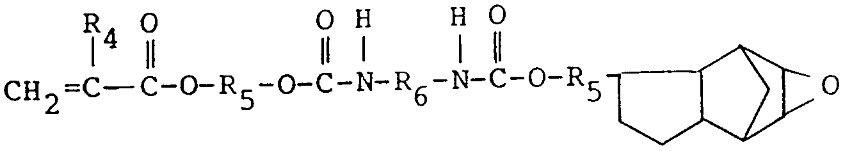

(15)

In the above formulae, $R_4$ is a hydrogen atom or a methyl group; $R_5$ is a divalent aliphatic saturated hydrocarbon group having 1 to 6 carbon atoms; and $R_6$ is a divalent hydrocarbon group having 1 to 10 carbon atoms.

In the above-described polymerizable epoxy monomer, examples of the divalent aliphatic hydrocarbon group having 1 to 6 carbon atoms represented by $R_5$ include straight chain or branched alkylene groups such as methylene, ethylene, propylene, tetramethylene, ethylethylene, pentamethylene and hexamethylene groups. As the divalent hydrocarbon group having 1 to 10 carbon atoms represented by $R_6$, there can be cited, for example, methylene, ethylene, propylene, tetramethylene, ethylethylene, pentamethylene, hexamethylene, polymethylene, phenylene,

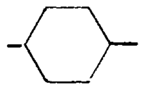 ,

and

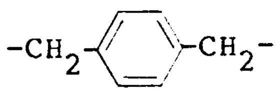

groups.

Specific examples of the polymerizable epoxy monomer are preferably 3,4-epoxycyclohexylmethyl acrylate and 3,4-epoxycyclohexylmethyl methacrylate. These compounds are put on the market and commercially available under METHB and AETHB (trade names for products by DAICEL CHEMICAL INDUSTRY CO., LTD.).

As the compound represented by formula $CH_2=CHX$ or $CH_2=CCH_3X$ above wherein X has the same meaning as defined above, there can be cited, for example, alkyl (meth)acrylates such as methyl (meth)-acrylate, ethyl (meth)acrylate, propyl (meth)acrylate, isopropyl (meth)acrylate, butyl (meth)acrylate, hexyl (meth)acrylate, octyl (meth)acrylate and lauryl (meth)acrylate; hydroxyalkyl (meth)acrylates such as hydroxyethyl (meth)acrylate and hydroxypropyl (meth)acrylate; alkyl vinyl ethers such as propyl vinyl ether, butyl vinyl ether, isohexyl vinyl ether and cyclohexyl vinyl ether; vinyl aromatic compounds such as $\alpha$-methylstyrene; vinyl acetate and the like.

The radical polymerization reaction between the polymerizable epoxy monomer and the compounds represented by the above formulae can be carried out by radical polymerization reaction similar to that described in connection with the compound having the repeating unit represented by formula (2) above.

The compounds having the repeating units represented by formulae (2) and (3), respectively, are preferably those having a number average molecular weight in the range of generally 3,000 to 100,000 and particularly 4,000 to 50,000.

Further, as the alicyclic polyepoxide crosslinking agent (b) which is used in the thermosetting coating composition of the present invention, there can also be employed advantageously those which can be prepared by reacting a hydroxyl group-containing alicyclic epoxy compound having at least one of epoxy group present on an alicyclic hydrocarbon ring and/or an epoxy group directly bonded to a carbon atom constituting an alicyclic hydrocarbon ring and at least one hydroxyl group with a polyisocyanate compound.

Examples of the hydroxyl group-containing alicycllic epoxy compound include those compounds represented by formulae (16) to (23) below, respectively.

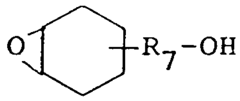

(16)

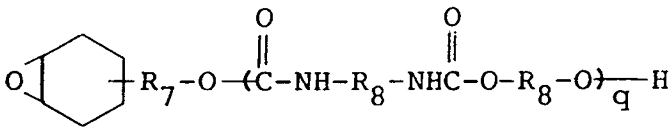

(17)

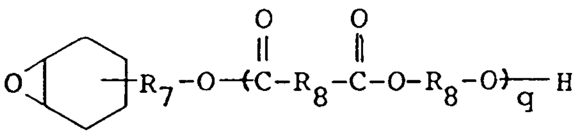

(18)

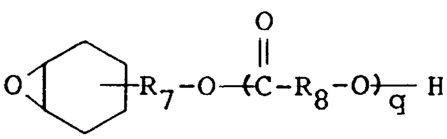

(19)

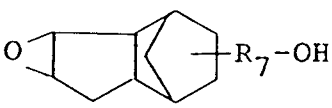

(20)

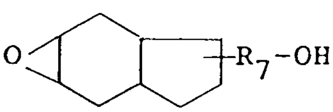

(21)

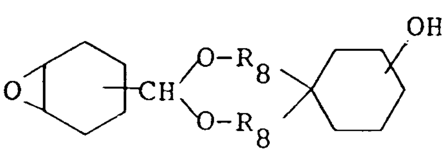

(22)

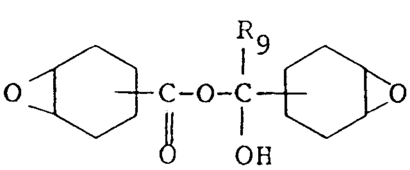

(23)

wherein $R_7$ is a divalent $C_{1-20}$-hydrocarbon group; $R_8$'s, which are the same or different, each represent a divalent $C_{1-8}$ hydrocarbon group; $R_9$ is a hydrogen atom or a methyl group; and q is an integer of 1 to 10.

In the above formulae, examples of the "divalent hydrocarbon group" include alkylene groups, cyclic alkylene groups, a phenylene group, substituted phenylene groups and the like. The alkylene groups may be of a straight chain type or branched type. Specific examples of the $C_{1-8}$-alkylene group include

methylene, ethylene, ethylethylene, propylene, butylene, pentamethylene, hexamethylene and octamethylene. As the $C_{1-20}$-alkylene group, there can be cited, for example, decamethylene, dodecamethylene, tetradecamethylene and octadecamethylene in addition to the specific examples of the above-described $C_{1-8}$-alkylene group.

Suitable examples of the hydroxyl group-containing alicyclic epoxy compound represented by the above formulae (16) to (23) include the following compounds;

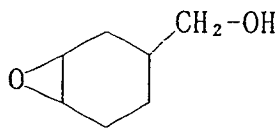

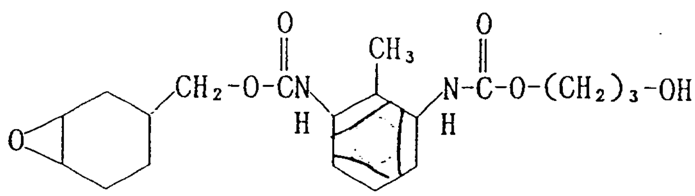

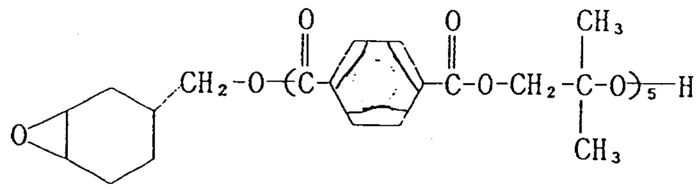

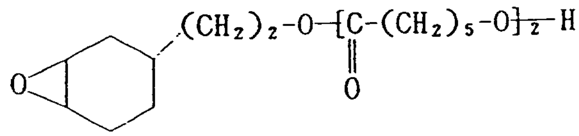

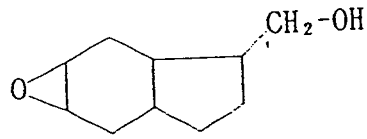

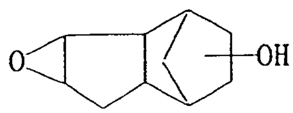

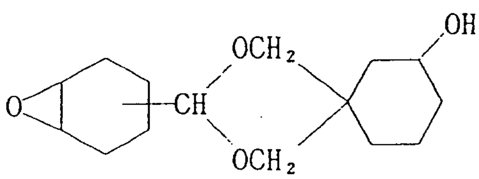

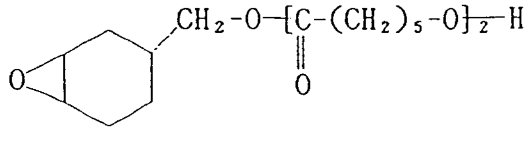

The polyisocyanate compound to be reacted with the hydroxyl group-containing alicyclic epoxy compound in order to obtain the alicyclic polyepoxide crosslinking agent (b) is a compound which has at least two isocyanate groups in the molecule. The polyisocyanate compound may be of any type such as aliphatic type, alicyclic type, aromatic type and aromatic-aliphatic type. Examples thereof include aliphatic diisocyantate compounds such as tetramethylene diisocyanate, hexamethylene diisocyanate, trimethylhexamethylene diisocyantae and decamethylene diisocyanate; alicyclic diisocyanates such as isophorone diisocyanate, hydrogenated xylylene diisocyanate and hydrogenated diphenylmethane diisocyanate; aromatic diisocyanates such as tolylene diisocyanate and diphenylmethane diisocyante; aromatic-aliphatic diisocyanates such as xylylene diioscyanate and tetramethylxylylene diisocyanate; and the like.

Besides those described above, those polyisocyanate compounds such as adducts of the above-described diisocyanate compound with a polyol (for example, ethylene glycol, trimethylolpropane, etc.), and biuret or isocyanurate compounds of the above-described aliphatic or alicyclic diisocyanate compounds can also be used. Among them, the aliphatic type, alicyclic type and aromatic-aliphatic type polyisocyanate compounds are preferred because these polyisocyanates show less denaturation and give rise to coating films having excellent weatherability.

The reaction between the hydroxyl group-containing alicyclic epoxy compound and the polyisocyanate compound can be carried out by the process which is known per se in which hydroxyl groups and isocyanate groups are reacted with each other. For example, the reaction can be performed by continuing reaction of a mixture of the hydroxyl group-containing epoxy compound and the polyisocyanate compound in a nitrogen atmosphere until substantially all the isocyanate groups are consumed, for example, at a temperature of 180 °C for 10 minutes to 24 hours. The mixture may be used in the form of an organic solvent solution as dissolved or dispersed in an inert organic solvent such as an ester type, ketone type, ether type or aromatic type one which contain no active hydrogen. In the reaction system, organic metals such as dibutyltin laurate, dibutyltin 2-ethylhexanoate, lead octenoate and zinc naphthenate can be blended as a reaction catalyst.

The blend ratio of the hydroxyl group-containing alicyclic epoxy compound to the polyisocyanate compound is not limited strictly and generally it is desirable to blend them so that the equivalent ratio of the hydroxyl group in the epoxy compound to the isocyanate group in the polyisocyanate compound can be in the range of 0.9 : 1 to 1.1 : 1. Examples of the reaction product between the hydroxyl group-containing alicyclic epoxy compound and the polyisocyanate compound include the following compounds:

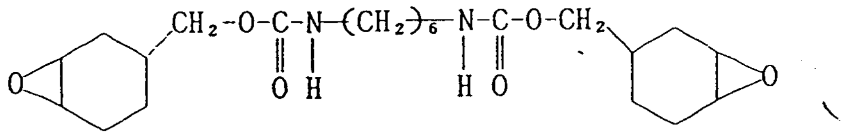

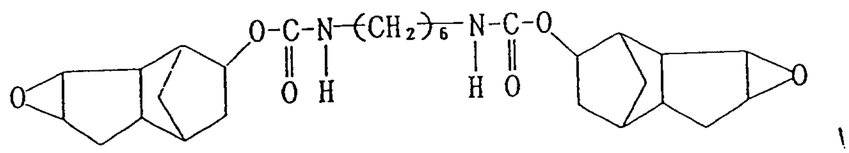

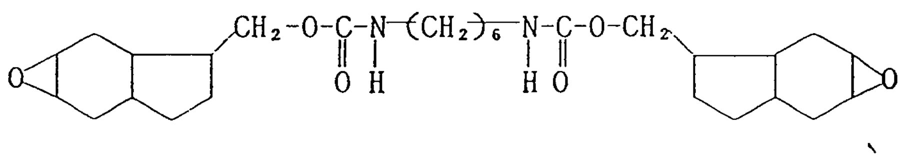

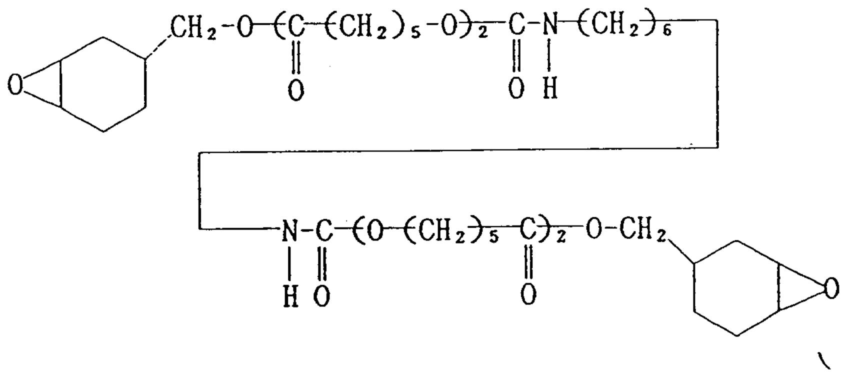

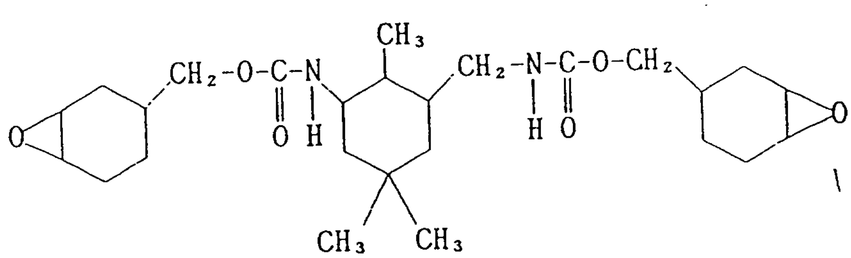

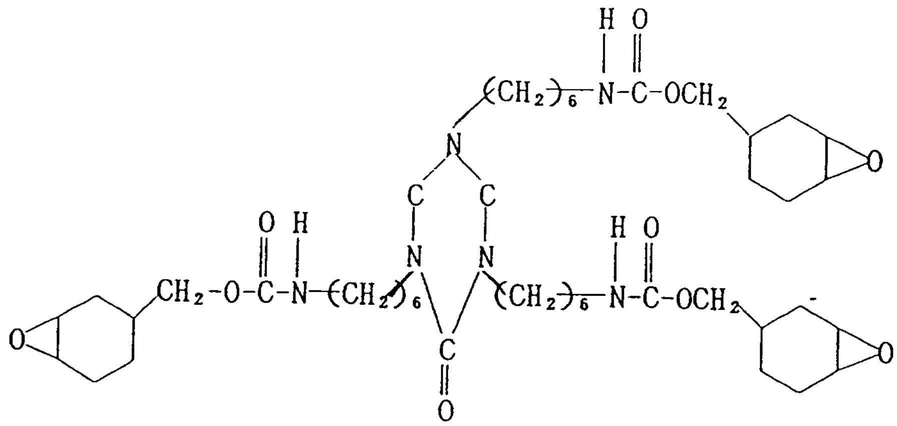

and the like.

The reaction products between the hydroxyl group-containing epoxy compound and the polyisocyanate compound are preferably those having a number average molecular weight in the range of generally 200 to 20,000, particularly 300 to 10,000.

The alicyclic polyepoxide crosslinking agent contains the alicyclic epoxy group in the range of generally no less than 2 on average, preferably 2 to 2,000 on average, more preferably 2 to 400 on average, per mole of the agent. If the amount of the epoxy group is less than 2 on average per molecule, the curability of the resulting coating film decreases and performances such as hardness, flexing resistance and corrosion resistance are aggravated.

The alicyclic polyepoxide crosslinking agent which has a softenning temperature of no higher than 130 °C, preferably no higher than 115 °C is favorable. The softenning temperature exceeding 130 °C is undesirable because there is a fear that the resulting coating film has a decreased smoothness.

In the present invention, it is desirable that the above-described base resin (a) and the alicyclic polyepoxide crosslinking agent (b) are blended in a proportion in such a range that the base resin (a) occupies generally 40 to 97 % by weight, preferably 50 to 95 % by weight, more preferably 60 to 90 % by weight, and the crosslinking agent (b) occupies 3 to 60 % by weight, preferably 5 to 50 % by weight, more preferably 10 to 40 % by weight, both based on the sum of the base resin (a) and the crosslinking agent (b). Proportions outside the above range is undesirable because there is a fear that the resulting coating film has a decreased curability and its performances such as water resistance, corrosion resistance and flex resistance are aggravated.

Catalyst (c):

As the quaternary ammonium hydroxide which is used as a catalyst in the thermosetting coating composition of the present invention, there can be used a compound represented by formula:

$[R_{10}R_{11}R_{12}R_{13}N]^{\oplus}OH^{\ominus}$

wherein $R_{10}$, $R_{11}$, $R_{12}$ and $R_{13}$, which are the same or different, each represent a $C_{1-18}$-alkyl group, a $C_{3-7}$-cycloalkyl group, an aryl group, or an aralkyl group. As the $C_{1-18}$-alkyl group and the $C_{3-7}$-cycloalkyl group, the above-described specific groups may be used. The aryl group may be monocyclic or polycyclic and examples thereof include phenyl, toluyl, xylyl, naphthyl, etc. groups. The aralkyl group is an alkyl group substituted with the above-described aryl group and examples thereof include benzyl, phenethyl, etc, groups.

The monovalent hydrocarbon group may be substituted with a hydroxyl group, and the substituted monovalnet hydrocarbon group includes, for example a hydroxyalkyl group.

As the quaternary ammonium hydroxide, there can be cited, for example, tetramethylammonium hydroxide, tetraethylammonium hydroxide, tetrapropylammonium hydroxide, tetrabutylammonium hydroxide, tetrapentylammonium hydroxide, tetraisoamylammonium hydroxide, tetradodecylammonium hydroxide, methyltriethylammonium hydroxide, ehtyltrimethyl-ammonium hydroxide, tetradecyltrimethylammonium hydroxide, monohydroxyethyltrimethylammonium hydroxide, monohydroxyethyltriethylammonium hydroxide, dihydroxyethyl-dimethylammonium hydroxide, dihydroxyethyldiethylammonium hydroxide, trihydroxyethylmonomethylammonium hydroxide, trihydroxyethylmonoethylammonium hydroxide, benzyltrimethylammonium hydroxide, benzyltriethylammonium hydroxide, benzylmethyldiethylammonium hydroxide and cyclohexyltrimethyl-ammonium hydroxide.

Among these compounds, preferred are tetraalkylammonium hydroxides, particularly tetramethylammonium hydroxides, tetraethylammonium hydroxide and the like because they are available industrially. If desired, the quaternary ammonium hydroxide may be partially or completely modified or neutralized with an organic acid such as formic acid, acetic acid, hydroxyacetic acid or glycolic acid; an inorganic acid such as hydrochloric acid; a Lewis acid such as boron fluoride, antimony fluoride or arsenic fluoride; or the like.

The catalyst (c) selected from the quaternary ammonium hydroxides described above may be blended in an amount in the range of generally 0.01 to 10 parts by weight, preferably 0.1 to 7 parts by weight, more preferably 0.1 to 5 parts by weight, per 100 parts by weight of the sum of the base resin (a) and the alicyclic polyepoxide crosslinking agent (b). If the blend amount is less than 0.01 part by weight, there is a fear that the curability of the resulting coating film decreases and the performances such as water resistance, corrosion resistance and flexing resistance of the coating film are aggravated. On the other hand, if the blend amount is more than 10 parts by weight, the effect of promoting curing is lessened, resulting in economical disadvantages.

Preparation of coating composition:

The thermosetting coating composition of the present invention can be formulated preferably in the form of an organic solvent type coating composition containing an organic solvent as a main medium or of an aqueous coating composition containing water as a main medium.

The organic solvent type coating composition can be obtained, for example, by mixing a solution of the base resin (a) dissolved or dispersed in an organic solvent with the crosslinking agent (b) and the catalyst (c). The crosslinking agent (b) and the catalyst (c) can be used in the state of a solution dissolved or dispersed in the organic solvent. The organic solvent which can be used is preferably those which are substantially inert to the base resin (a), the crosslinking agent (b) and the catalyst (c). Specific examples thereof include alcohol type solvents such as methanol, ethanol, propanol, butanol, methylcellosolve, ethylcellosolve and butylcellosolve; ether type solvents such as ethylene glycol diethyl ether and diethlene glycol dimethyl ether; ketone type solvents such as acetone, methyl ethyl ketone, methyl isobutyl ketone and cyclohexanone; ester type solvents such as ethyl acetate, propyl acetate and butyl acetate; aromatic hydrocarbon type solvents such as toluene and xylene; and the like.

The aqueous coating composition can be prepared as follows. That is, when the quaternary ammonium hydroxide is used as the catalyst (c), it can be obtained by a mixture of the base resin (a), the crosslinking agent (b), the quaternary ammonium hydroxide (c) and optionally a neutralizing agent well blended is dissolved or dispersed in water. On the other hand, when the metal chelate is used as the catalyst (c), the coating composition can be obtained by a mixture of the base resin (a), the crosslinking agent (b), the metal chelate and a neutrallizing agent well blended is dissolved or dispersed in water. On this occasion, the base resin (a) can be used after it is dissolved or dispersed in a hydrophilic organic solvent. The hydrophilic organic solvent is not limited particularly, and any organic solvent may be used so far as it is substantially inert to the base resin (a), the crosslinking agent (b) and the catalyst (c) and it can be dissolved in or it is miscible with water. Specific examples thereof include alcohol type solvents such as methanol, ethanol, propanol, methylcellosolve, ethylcellosolve and butylcellosolve; ether type solvents such as ethylene glycol diethyl ether and ethylene glycol dimethyl ether; ketone type solvents such as acetone; ester type solvents such as sorbitol acetate and methylcellosolve acetate; and the like. As the neutralizing agent, there can be cited, for example, ammonia, trimethylamine, triethylamine, tributylamine, dimethylethanol-amine, diethylethanolamine, dimethylpropanolamine, methyl-diethanolamine, ethyldiethanolamine and triethanolamine. These neutralizing agents can be blended in a proportion in the range of usually 0.2 to 1.5 equivalents, preferably 0.4 to 1.2 equivalents per equivalent of carboxyl group in the base resin (a).

The thermosetting coating composition may contain various additives for coating composition, such as color pigments, fillers, flowability adjustors, ultraviolet absorbents, which are known per se. As the color pigment, there can be cited, for example, titanium oxide, carbon black, quinacridone, pigment red, phthalocyanin blue, phthalocyanin green, aluminum flake, nickel flake, copper flake, brass flake, pearl mica and color mica. As the filler, there can be used, for example, barium sulfate, calcium carbonate and clay. Examples of the flowability adjustor include silica powder and fine particles of polymers. As the ultraviolet absorbent, there can be cited, for example, benzophenone type ones, triazole type ones and formanilide.

Process of forming coating films:

The thermosetting coating composition provided by the present invention can be used for forming surface protection films on various substrates.

The process of forming coating films using the thermosetting coating composition of the invention is not limited particularly, and can be carried out by coating the coating composition on the surface of a substrate by various means such as electrodeposition coating (aqueous), spray coating, dip coating, roll coating and brush coating, and drying it. The thickness of coating films is not limited particularly. Usually, thickness in the range of 10 to 100 μm are considered to be sufficient. The coating films can be dried usually for 30 minutes at 100 °C or for 10 minutes at 180 °C. The substrate on which the coating composition is applied is not limited particularly. The coating composition can be applied to a wide variety of metals, preferably steel, aluminum, alumite, copper, plated steel which is a steel on the surface of which is plated with zinc, tin, chrome, aluminum or the like, a surface treated steel whose surface is chemically treated with chromic acid or phosphoric acid or electrolytically treated.

The thermosetting coating composition of the invention can be used advantageously as a coating composition for a pigmented base coat, particularly in a pigmented multi-layer coating film formed by sequentially applying a pigmented base coat and a clear top coat on a substrate.

The coating composition for pigmented base coat is a composition made of a coating composition composed of the above-described base resin (a), crosslinking agent (b) and catalyst (c) which is further blended with metal flake powder and/or mica powder as essential component. As the metal flake powder which can be blended, there can be cited, for example, aluminum flake, nickel flake, copper flake and brass flake. As the mica powder, there can be cited, for example, pearl mica and color mica. These powders can be blended in a proportion in the range of usually 1 to 30 parts by weight, preferably 2 to 20 parts by weight per 100 parts by weight of the sum of the base resin (a) and the crosslinking agent (b). The coating composition for pigmented base coat may be of an organic solvent type or an aqueous type.

The clear top coat to be formed on the surface of the pigmented base coat can be formed using a coating composition for clear top coat which contains as essential components a base resin having a hydrolytic group directly bonded to a silicon atom and/or a silanol group, a hydroxyl group and an epoxy group (hereafter, abbreviated as "base resin for top coat") and a curing catalyst.

Methods of applying the coating compositions for pigmented base coat and for clear top coat are not limited particularly and conventional methods may be used as they are. For example, air spray, static air spray, airless spray, bell static coating, minibell static coating may be used advantageously.

Next, the present invention will be explained more concretely by examples. However, it should not be construed that the present invention is limited thereto. All "parts" and "percentages (%)" in the following examples and comparative examples are by weight.

Example 1

Methylpropanol (89 parts) was charged in a four-necked flask and heated at 110 °C. A mixture of 20 parts of hydroxyethyl acrylate, 60 parts of methyl methacrylate and 20 parts of styrene and also a mixture of 1 part of 2,2'-azobisisobutyronitrile and 10 parts of methyl isobutyl ketone were dropwise added thereto in 1 hour. After aging the resulting mixture for 1.5 hours, a resin was obtained which had a hydroxyl value of 97, a number average molecular weight of about 20,000 and a solid content of 50 %. To this were added 31.3 parts of a 80 % EHPE-3150 solution obtained by dissolving 25 parts of EHPE-3150 (epoxidated polyvinylcyclohexene oxide, epoxy equivalent: 190, average molecular weight: 1,500; trade name for a product by DAICEL CHEMICAL INDUSTRY CO., LTD.) in 6.3 parts of methylpropanol, and then 19.5 parts of a 20 % methanol solution of tetraethylammonium hydroxide. The resulting mixture was stirred and diluted with xylol to obtain a coating composition having a a solid content of 30 %.

Example 2

Procedures of Example 1 were repeated except that the monomer components used in Example 1 were replaced by those described below:

| | |
|---|---|
| hydroxyethyl methacrylate | 25 parts |
| 2-ethylhexyl methacrylate | 10 parts |
| methyl methacrylate | 55 parts |
| styrene | 10 parts |

to prepare an acrylic resin, which was aged to obtain 200 parts of resin having a hydroxyl value of 108, a number average molecular weight of 25,000, and a solid content of 50 %. To this were added 18.8 parts of 80 % EHPE-3150 solution (15 parts in terms of solid content), and then 16.2 parts of a 10 % methanol solution of tetramethylammonium hydroxide. The resulting mixture was stirred and diluted with xylol to obtain a coating composition having a solid content of 30 %.

Example 3

A mixture of 200 parts of the 50 % resin obtained in Example 1, 15 parts of 3,4-epoxycyclohexylcarboxymethylcyclohexene oxide and 17.9 parts of a 10 % methanol solution of tetrabutylammonium hydroxide was stirred and then diluted with xylol to obtain a coating composition having a solid content of 30 %.

Example 4

Methylpropanol (89 Parts) was charged in a four-necked flask and heated at 110°C. A mixture of 15 parts of hydroxyethyl acrylate, 70 parts of methyl methacrylate and 15 parts of styrene and also a mixture of 1 part of azoisobutyronitrile and 10 parts of methyl isobutyl ketone were dropwise added thereto in 1 hour. After aging the resulting mixture for 1.5 hours, a base resin was obtained which had a hydroxyl value of 73, a number average molecular weight of 25,000 and a solid content of 50 %. On the other hand, 14.5 parts of DURANATE TPA-100 (isocyanurated product of hexamethylene diisocyanate, trifunctional isocyanate, isocyanate equivalent: 185; trade name for a product by ASAHI CHEMICAL INDUSTRY CO., LTD.) and 10.5 parts of 3,4-epoxytetrahydrobenzyl alcohol (produced by DAICEL INDUSTRY CO., LTD., epoxy equivalent: 135) were reacted at 120°C for 3 hours, and after confirming that isocyanate value was 0, 6.3 parts of methylpropanol was added to the reaction mixture to obtain an epoxy compound having a solid content of 80 % and an epoxy equivalent of 325. The base resin (200 parts), 31.3 parts of the epoxy compound and 19 parts of a 20 % methanol solution of tetraethylammonium hydroxide were mixed and well stirred, and then the resulting mixture was diluted with xylol to obtain a coating composition having a solid content of 30 %.

Example 5

Procedures of Example 4 were repeated except that the monomer components used in Example 4 were replaced by those described below:

| | |
|---|---|
| hydroxyethyl methacrylate | 30 parts |
| 2-ethylhexyl methacrylate | 10 parts |
| methyl methacrylate | 45 parts |
| styrene | 15 parts |

to prepare an acrylic resin, which was aged to obtain 200 parts of a resin having a hydroxyl value of 129, a number average molecular weight of 20,000, and a solid content of 50 %. On the other hand, 17.5 parts of IPDI-T1890 (isocyanurated product of isophorone diisocyanate, isocyante equivalent: 247; trade name for a product by DAICEL HUELLS CO., LTD.) and 12.5 parts of CELLOXIDE 4000 (trade name for a product by DAICEL INDUSTRY CO., LTD., epoxy equivalent: 177) were at 120°C for 3 hours, and after confirming that isocyanate value was 0, 7.5 parts of methylpropanol was added to the reaction mixture to obtain an epoxy compound having a solid content of 80 % and an epoxy equivalent of 425. The base resin (200 parts), 37.5 parts of the epoxy compound and 16 parts of a 10 % methanol solution of tetraethylammonium hydroxide were mixed and well stirred, and then the resulting mixture was diluted with xylol to obtain a coating composition having a solid content of 30 %.

Example 6

Adduct (26.5 parts) of 1 mole of 3,4-epoxytetrahydrobenzyl alcohol with 2 mole of ε-caprolactone (produced by DAICEL CHEMICAL INDUSTRY CO., LTD., epoxy equivalent: 360) and 13.5 parts of DURANATE TPA-100 (isocyanurated product of hexamethylene diisocyanate, trade name for a product by ASAHI CHEMICAL INDUSTRY CO., LTD. isocyanate equivalent: 185) were reacted at 120 °C for 3 hours. After confirming that isocyanate value was 0, 10 parts of methylpropanol was added to the reaction mixture to obtain an epoxy compound having a solid content of 80 % and an epoxy equivalent of 545. The epoxy compound thus obtained (50 parts), 200 parts of the 50 % base resin obtained in Example 4 and 18 parts of a 20 % methanol solution of tetrabutylammonium hydroxide were mixed and well stirred, and then the resulting mixture was diluted with xylol to obtain a coating composition having a solid content of 30 %.

Comparative Example 1

The 50 % base resin (200 parts) obtained in Example 1 was blended with 42 parts of SYMEL 303 (trade name for an aminoaldehyde resin produced by MITSUI TOATSU CO., LTD.) and 231 parts of xylol to obtain a coating composition having a solid content of 30 %.

Preparation of coating films:

Each of the coating compositions obtained in Examples 1 to 6 and Comparative Example 1 was spray coated on a zinc phosphate-treated steel plate separately in a dry film thickness of about 20 μm, and baked under baking conditions described in Table 1 to obtain coating films. The coating film samples thus obtained were subjected to tests on coating film smoothness, brine spray-resistance, pencil hardness and flexing resistance. Coating films for the measurement of gel fraction were obtained in the same manner as above except that glass plates were used instead of the steel plates.

Table 1

| | EX.1 | Ex. 2 | Ex. 3 | Ex. 4 | Ex. 5 | Ex. 6 | Compar. Ex. 1 |
|---|---|---|---|---|---|---|---|
| Storage Stability of Coating Composition(*1) | Good | Good | Good | Good | Good | Good | Good |
| Baking Conditions | 140°C 20 min. | 140°C 20 min. | 140°C 20 min. | 140°C 20 min. | 140°C 20 min. | 140°C 20 min. | 140°C 20 min. |
| Performance of Coating Film | | | | | | | |
| Coating Film Smoothness (*2) | Good | Good | Good | Good | Good | Good | Good |
| Salt Spray Resistance(*3) | Accepta-ble | Accepta-ble | Accepta-ble | Accepta-ble | Accepta-ble | Accepta-ble | Unac-ceptable |
| Pencil Hardness(*4) | 3H | 3H | 2H | 3H | H | 2H | 4B |
| Flexing Resistance(*5) | Accepta-ble | Accepta-ble | Accepta-ble | Accepta-ble | Accepta-ble | Accepta-ble | Unac-ceptable |
| Gel Fraction(*6) | 99 | 96 | 90 | 96 | 89 | 91 | 50 |

Notes for Table 1:

(*1): Storage stability; After leaving at 30°C for 1 month, sedimentation and separation of the coating composition were observed visually. In addition, the coating composition after the storage was coated and dried and examined for initial appearance of the resulting coating film and decrease in the performances (salt spray resistance, flexing resistance, pencil hardness, etc.) of the coating film.

(*2): Coating film smoothness; Depressions and protrusions on the surface of the resulting coating film were observed visually.

(*3): Salt spray resistance; Tests were carried out according to JIS Z-2371. Samples which showed a creep width of 2 mm for one side from cut portion in the coating film were judged to be acceptable.

(*4): Pencil hardness; Tests were carried out according to JIS F-5400.

(*5): Flexing resistance; Test plates were folded at right angles in an atmosphere at 20°C in 2 to 3 seconds. Samples which showed no peeling-off nor cracking of the coating film at the folded portion were judged to be acceptable.

(*6): Gel fraction; Dry coating film was peeled off from the glass plate and introduced in a 300 mesh stainless steel net vessel, followed by extraction for 4 hours with a 1 : 1 acetone/methanol solvent in a Soxhlet extractor at reflux temperature. Gel fraction was calculated according to the following formula:

Gel fraction =

$$\frac{\text{Weight of coating film after extraction}}{\text{Weight of coating film before extraction}} \times 100$$

The test (*1) to (*6) were the same in the following examples and comparative examples.

Example 7

Methylpropanol (89 parts) was charged in a four-necked flask and heated at 110°C. A mixture of 3 parts of acrylic acid, 20 parts of hydroxyethyl acrylate, 57 parts of methyl methacrylate and 20 parts of styrene and also a mixture of 1 part of 2,2'-azobisisobutyronitrile and 10 parts of methyl isobutyl ketone were dropwise added thereto in 1 hour. After aging the resulting mixture for 1.5 hours, a resin was obtained which had an acid value of 23, a hydroxyl value of 97, a number average molecular weight of about 20,000 and a solid content of 50 %. To this were added 31.3 parts of a 80 % EHPE-3150 solution obtained by dissolving 25 parts of EHPE-3150 (epoxidated polyvinyl-cyclohexene oxide, epoxy equivalent: 190, average molecular weight: 1,500; trade name for a product by DAICEL CHEMICAL INDUSTRY CO., LTD.) in 6.3 parts of methylpropanol, and then 19.5 parts of a 20 % methanol solution of tetraethylammonium hydroxide. The resulting mixture was stirred and diluted with xylol to obtain a coating composition having a solid content of 30 %.

Example 8

Procedures of Example 7 were repeated except that the monomer components used in Example 7 were replaced by those described below:

| | |
|---|---|
| methacrylic acid | 4 parts |
| hydroxyethyl methacrylate | 25 parts |
| 2-ethylhexyl methacrylate | 10 parts |
| methyl methacrylate | 51 parts |
| styrene | 10 parts |

to prepare an acrylic resin, which was aged to obtain 200 parts of a resin having an acid value of 26, a hydroxyl value of 108, a number average molecular weight of 25,000, and a solid content of 50 %. To this were added 18.8 parts of 80 % EHPE-3150 solution (15 parts in terms of solid content), and then 16.2 parts of a 10 % methanol solution of tetramethylammonium hydroxide. The resulting mixture was stirred and diluted with xylol to obtain a coating composition having a solid content of 30 %.

Example 9

A mixture of 200 parts of the 50 % resin obtained in Example 7, 15 parts of 3,4-epoxycyclohexylcarboxymethylcyclohexene oxide and 17.9 parts of a 10 % methanol solution of tetrabutylammonium hydroxide was stirred and then diluted with xylol to obtain a coating composition having a solid content of 30 %.

Example 10

Methylpropanol (89 parts) was charged in a four-necked flask and heated at 110°C. A mixture of 2.7 parts of acrylic acid, 15 parts of hydroxyethyl acrylate, 67.3 parts of methyl methacrylate and 15 parts of styrene and also a mixture of 1 part of azoisobutyronitrile and 10 parts of methyl isobutyl ketone were dropwise added thereto in 1 hour. After aging the resulting mixture for 1.5 hours, a base resin was obtained which had an acid value of 21, a hydroxyl value of 73, a number average molecular weight of 25,000 and a solid content of 50 %. On the other hand, 14.5 parts of DURANATE TPA-100 (isocyanurated product of hexamethylene diisocyanate, trifunctional isocyanate, isocyanate equivalent: 185; trade name for a product by ASAHI CHEMICAL INDUSTRY CO., LTD.) and 10.5 parts of 3,4-epoxytetra-hydrobenzyl alcohol (produced by DAICEL INDUSTRY CO., LTD., epoxy equivalent: 135) were reacted at 120°C for 3 hours, and after confirming that isocyanate value was 0, 6.3 parts of methylpropanol was added to the reaction mixture to obtain an epoxy compound having a solid content of 80 % and an epoxy equivalent of 325. The base resin (200 parts), 31.3 parts of the epoxy compound and 19 parts of a 20 % methanol solution of tetraethylammonium hydroxide were mixed and well stirred, and then the resulting mixture was diluted with xylol to obtain a coating composition having a solid content of 30 %.

Example 11

Procedures of Example 10 were repeated except that the monomer components used in Example 10 were replaced by those described below:

| | |
|---|---|
| methacrylic acif | 3 parts |
| hydroxyethyl methacrylate | 30 parts |
| 2-ethylhexyl methacrylate | 10 parts |
| methyl methacrylate | 42 parts |
| styrene | 15 parts |

to prepare an acrylic resin, which was aged to obtain 200 parts of a resin having an acid value of 20, a hydroxyl value of 129, a number average molecular weight of 20,000, and a solid content of 50 %. On the other hand, 17.5 parts of IPDI-T1890 (isocyanurated product of isophorone diisocyanate, isocyanate equivalent: 247; trade name for a product by DAICEL HUELLS CO., LTD.) and 12.5 parts of CELLOXIDE 4000 (trade name for a product by DAICEL INDUSTRY CO., LTD., epoxy equivalent: 177) were reacted at 120°C for 3 hours, and after confirming that isocyanate value was 0, 7.5 parts of methylpropanol was added to the reaction mixture to obtain an epoxy compound having a solid content of 80 % and an epoxy equivalent of 425. The base resin (200 parts), 37.5 parts of the epoxy compound and 16 parts of a 10 % methanol solution of tetraethylammonium hydroxide were mixed and well stirred, and then the resulting mixture was diluted with xylol to obtain a coating composition having a solid content of 30 %.

Example 12

Adduct (26.5 parts) of 1 mole of 3,4-epoxytetrahydrobenzyl alcohol with 2 mole of ε-caprolactone (produced by DAICEL CHEMICAL INDUSTRY CO., LTD., epoxy equivalent: 360) and 13.5 parts of DURANATE TPA-100 (the same as described above) were reacted at 120°C for 3 hours. After confirming that isocyanate value was 0, 10 parts of methylpropanol was added to the reaction mixture to obtain an epoxy compound having a solid content of 80 % and an epoxy equivalent of 545. The epoxy compound thus obtained (50 parts), 200 parts of the 50 % base resin obtained in Example 7 and 18 parts of a 20 % methanol solution of tetrabutylammonium hydroxide were mixed and well stirred, and then the resulting mixture was diluted with xylol to obtain a coating composition having a solid content of 30 %.

Comparative Example 2

The 50 % base resin (200 parts) obtained in Example 7 was blended with 42 parts of SYMEL 303 (trade name for an aminoaldehyde resin produced by MITSUI TOATSU CO., LTD.) and 231 parts of xylol to obtain a coating composition having a solid content of 30 %.

Preparation of coating films:

Coating films were prepared and tested in the same manner as described above. Results obtained are shown in Table 2.

Table 2

| | Ex. 7 | Ex. 8 | Ex. 9 | Ex. 10 | Ex. 11 | Ex. 12 | Compar. Ex. 2 |
|---|---|---|---|---|---|---|---|
| Storage Stability of Coating Composition(*1) | Good | Good | Good | Good | Good | Good | Good |
| Baking Conditions | 140°C 20 min. | 140°C 20 min. | 140°C 20 min. | 140°C 20 min. | 140°C 20 min. | 140°C 20 min. | 140°C 20 min. |
| Performance of Coating Film | | | | | | | |
| Coating Film Smoothness (*2) | Good | Good | Good | Good | Good | Good | Good |
| Salt Spray Resistance(*3) | Acceptable | Acceptable | Acceptable | Acceptable | Acceptable | Acceptable | Unacceptable |
| Pencil Hardness(*4) | 3H | 3H | 2H | 3H | 2H | 2H | 4B |
| Flexing Resistance(*5) | Acceptable | Acceptable | Acceptable | Acceptable | Acceptable | Acceptable | Unacceptable |
| Gel Fraction(*6) | 99 | 97 | 90 | 95 | 91 | 92 | 70 |

Example 13

Methylpropanol (89 parts) was charged in a four-necked flask and heated at 110°C. A mixture of 3 parts of acrylic acid, 20 parts of hydroxyethyl acrylate, 57 parts of methyl methacrylate and 20 parts of

styrene and also a mixture of 1 part of 2,2'-azobisisobutyronitrile and 10 parts of methyl isobutyl ketone were dropwise added thereto in 1 hour. After aging the resulting mixture for 1.5 hours, a resin was obtained which had an acid value of 23, a hydroxyl value of 97, a number average molecular weight of about 20,000 and a solid content of 50 %. To this were added 31.3 parts of a 80 % EHPE-3150 solution obtained by diisolving 25 parts of EHPE-3150 (epoxidated polyvinyl-cyclohexene oxide, epoxy equivalent: 190, average molecular weight: 1,500; trade name for a product by DAICEL CHEMICAL INDUSTRY CO., LTD.) in 6.3 parts of methylpropanol, and then 19.5 parts of a 20 % aqueous solution of tetraethylammonium hydroxide. While stirring, 166 parts of deionized water was added to the resulting mixture to obtain an aqueous dispersion having a solid content of 30 % and an average particle diameter of 0.1 µm.

Example 14

Procedures of Example 13 were repeated that the monomer components used in Example 13 were replaced by those described below:

| | |
|---|---|
| methacrylic acid | 4 parts |
| hydroxyethyl methacrylate | 25 parts |
| 2-ethylhexyl methacrylate | 10 parts |
| methyl methacrylate | 51 parts |
| styrene | 10 parts |

to prepare an acrylic resin, which was aged to obtain 200 parts of a resin having an acid value of 26, a hydroxyl value of 108, a number average molecular weight of 25,000, and a solid content of 50 %. To this were added 18.8 parts of 80 % EHPE-3150 solution (15 parts in terms of solid content), and then 16.2 parts of a 10 % aqueous solution of tetramethylammonium hydroxide. While stirring, 148 parts of deionized water was added to the resulting mixture to obtain an aqueous dispersion having a solid content of 30 % and an average particle diameter of 0.15 m.

Example 15

While stirring, deionized water (148 parts) was added to a mixture of 200 parts of the 50 % resin obtained in Example 13, 15 parts of 3,4-epoxycyclohexylcarboxymethylcyclohexene oxide, 17.9 parts of a 10 % aqueous solution of tetrabutylammonium hydroxide and 2 parts of triethylamine to obtain an aqueous dispersion having a solid content of 30 % and an average particle diameter of 0.09 µm.

Example 16

Methylpropanol (89 parts) was charge in a four-necked flask and heated at 110 °C. A mixture of 2.7 parts of acrylic acid, 15 parts of hydroxyethyl acryalte, 67.3 parts of methyl methacrylate and 15 parts of styrene and also a mixture of 1 part of azoisobutyronitrile and 10 parts of methyl isobutyl ketone were dropwise added thereto in 1 hour. After aging the resulting mixture for 1.5 hours, a base resin was obtained which had an acid value of 21, a hydroxyl value of 73, a number average molecular weight of 25,000 and a solid content to 50 %. On the other hand, 14.5 parts of DURANATE TPA-100 (isocyanurated product of hexamethylene diisocyanate, trifunctional isocyanate, isocyanate equivalent: 185' trade name for a product by ASAHI CHEMICAL INDUSTRY CO., LTD.) and 10.5 parts of 3,4-epoxytetra-hydrobenzyl alcohol (produced by DAICEL INDUSTRY CO., LTD., epoxy equivalent: 135) were reacted at 120 °C for 3 hours, and after confirming that isocyanate value was 0, 6.3 parts of methylpropanol was added to the reaction mixture to obtain an epoxy compound having a solid content of 80 % and an epoxy equivalent of 325. While well stirring a mixture of the base resin (200 parts), 31.3 parts of the epoxy compound and 19 parts of a 20 % aqueous solution of tetraethylammonium hydroxide, 166 parts of deionized water was added to the mixture to obtain an aqueous dispersion having a solid content of 30 % and an average particle diameter of 0.09 µm.

Example 17

Procedures of Example 16 were repeated except that the monomer components used in Example 16 were replaced by those described below:

| | |
|---|---|
| methacrylic acid | 3 parts |
| hydroxyethyl methacrylate | 30 parts |
| 2-ethylhexyl methacrylate | 10 parts |
| methyl methacrylate | 42 parts |
| styrene | 15 parts |

to prepare an acrylic resin, which was aged to obtain 200 parts of a resin having an acid value of 20, a hydroxyl value of 129, a number average molecular weight of 20,000, and a solid content of 50 %. On the other hand, 17.5 parts of IPDI-T1890 (isocyanurated product of isophorone diisocyanate, isocyanate equivalent: 247; trade name for a product by DAICEL HUELLS CO., LTD.) and 12.5 parts of CELLOXIDE 4000 (trade name for a product by DAICEL INDUSTRY CO., LTD., epoxy equivalent: 177) were reacted at 120°C for 3 hours, and after confirming that isocyanate value was 0, 7.5 parts of methylpropanol was added to the reaction mixture to obtain an epoxy compound having a solid content of 80 % and an epoxy equivalent of 425. While stirring, 142 parts of deionized water was added to a mixture of the base resin (200 parts), 37.5 parts of the epoxy compound and 16 parts of a 10 % aqueous solution of tetramethylammonium hydroxide, to obtain an aqueous dispersion having a solid content of 30 % and an average particle diameter of 0.16 m.

## Example 18

Adduct (26.5 parts) of 1 mole of 3,4-epoxytetrahydrobenzyl alcohol with 2 mole of ε-caprolactone (produced by DAICEL CHEMICAL INDUSTRY CO., LTD., epoxy equivalent: 360) and 13.5 parts of DURANATE TPA-100 (the same as described above) were reacted at 120°C for 3 hours. After confirming that isocyanate value was 0, 10 parts of methylpropanol was added to the reaction mixture to obtain an epoxy compound having a solid content of 80 % and an epoxy equivalent of 545. The epoxy compound thus obtained (50 parts), 200 parts of the 50 % base resin obtained in Example 16 and 18 parts of a 20 % aqueous solution of tetrabutylammonium hydroxide were mixed. While well stirring, 197 parts of deionized water was added to the resulting mixture to obtain an aqueous dispersion having a solid content of 30 % and an average particle diameter of 0.18 µm.

## Comparative Example 3

Procedure of Example 13 were repeated except that 20 parts of hydroxyethyl acrylate and 57 parts of methyl methacrylate used in Example 13 were replaced by 77 parts of methyl methacrylate, 19.5 parts of the 20 % aqueous solution of tetraethylammonium hydroxide in Example 13 was replaced by 3.4 parts of trimethylamine, and the quantity of deionized water (166 parts) in Example 13 was changed to 172 parts to obtain an aqueous dispersion having a solid content of 30 %.

## Preparation of coating films:

Coating films were prepared and tested in the same manner as described above. Results obtained are shown in Table 3.

Table 3

| | EX.13 | Ex.14 | Ex.15 | Ex.16 | Ex.17 | Ex.18 | Compar. Ex. 3 |
|---|---|---|---|---|---|---|---|
| Storage Stability of Coating Composition(*1) | Good | Good | Good | Good | Good | Good | Good |
| Baking Conditions | 140°C 20 min. | 140°C 20 min. | 140°C 20 min. | 140°C 20 min. | 140°C 20 min. | 140°C 20 min. | 140°C 20 min. |
| Performance of Coating Film | | | | | | | |
| Coating Film Smoothness (*2) | Good | Good | Good | Good | Good | Good | Good |
| Salt Spray Resistance(*3) | Accepta-ble | Accepta-ble | Accepta-ble | Accepta-ble | Accepta-ble | Accepta-ble | Unac-cetable |
| Pencil Hardness(*4) | 3H | 3H | 2H | 3H | 2H | 2H | 4B |
| Flexing Resistance(*5) | Accepta-ble | Accepta-ble | Accepta-ble | Accepta-ble | Accepta-ble | Accepta-ble | Unac-ceptable |
| Gel Fraction(*6) | 99 | 98 | 94 | 95 | 92 | 93 | 68 |

Coating compositions (I-1) to (I-12) for pigmented base coat

Coating compositions for pigmented base coat were obtained by blending base resins with aluminum paste in blend ratios shown in Table 4. Aluminum paste (ALPASTE 1109MA, trade name for a product by

TOYO ALUMI INDUSTRY CO., LTD., 75 % aluminum powder) was dispersed in an organic solvent solution of the base resin.

Table 4

| Coating Composition for Pigmented Base Coat | Coating Composition | Blend Ratio of Coating of Composition (Solid Content) | Aluminum Paste |
|---|---|---|---|
| I-1 | Example 1 | 100 | 15 |
| I-2 | Comparative Example 1 | 100 | 15 |
| I-3 | Example 7 | 100 | 15 |
| I-4 | Example 8 | 100 | 15 |
| I-5 | Example 9 | 100 | 15 |
| I-6 | Example 10 | 100 | 15 |
| I-7 | Example 11 | 100 | 15 |
| I-8 | Example 12 | 100 | 15 |
| I-9 | Example 19 | 100 | 15 |
| I-11 | Comparative Example 2 | 100 | 15 |

## Claims

**1.** A thermosetting coating composition comprising as essential components:

(a) a hydroxyl group-containing base resin containing both hydroxyl and carboxyl groups with an acid value in the range of 1 to 100, a hydroxyl value in the range of 10 to 500 and a number average molecular weight in the range of 1,000 to 100,000,

(b) an alicyclic polyepoxide crosslinking agent which is a polyepoxy compound having an alicyclic hydrocarbon ring, and having at least two per molecule of an epoxy group present on the alicyclic hydrocarbon ring and/or of an epoxy group directly bonded to a carbon atom constituting the alicyclic hydrocarbon ring,

wherein said base resin (a) is present in an amount of 40 to 97 % by weight and said alicyclic polyepoxide crosslinking agent (b) is present in an amount of 3 to 60 % by weight based on the sum of said base resin (a) and said crosslinking agent (b), and

(c) a catalyst selected from the group consisting of a quaternary ammonium hydroxide which is a compound represented by formula:

$$[R_{10}R_{11}R_{12}R_{13}N]^{\oplus} OH^{\ominus}$$

wherein $R_{10}$, $R_{11}$, $R_{12}$ and $R_{13}$, which are the same or different, each represent a $C_1$-$C_{18}$-alkyl group, a $C_3$-$C_7$-cycloalkyl group, an aryl group or an aralkyl group,

wherein said catalyst (c) is contained in an amount of 0.01 to 10 parts by weight per 100 parts by weight of the sum of said base resin (a) and said alicyclic polyepoxide crosslinking agent (b).

**2.** The composition as claimed in claim 1, wherein said hydroxyl group-containing base resin (a) is a hydroxyl group-containing vinyl resin.

**3.** The composition as claimed in claim 1, wherein said resin containing both hydroxyl and carboxyl groups is a carboxyl group-containing vinyl type resin.

**4.** The composition as claimed in claim 1, wherein said base resin (a) has a flex temperature of no higher than 130 °C.

**5.** The composition as claimed in Claim 1, wherein said polyepoxy compound is selected from compounds set forth below

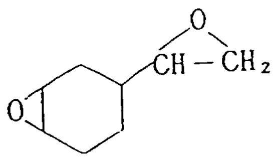

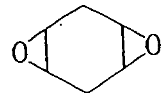

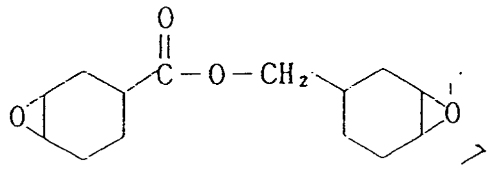

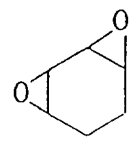

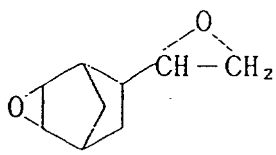

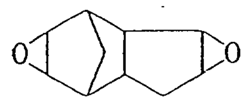

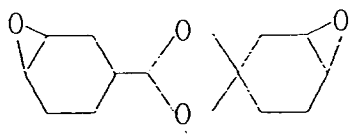

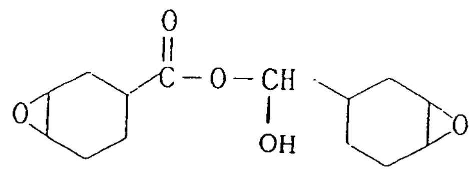

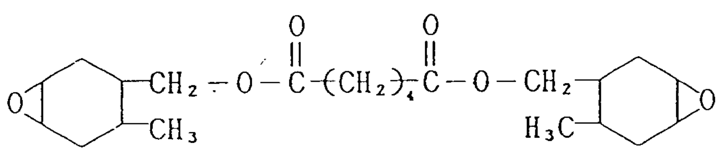

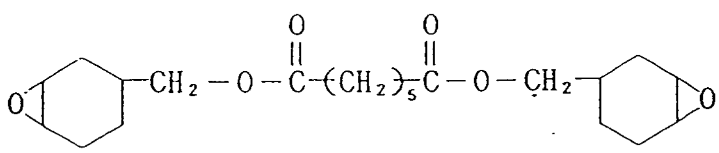

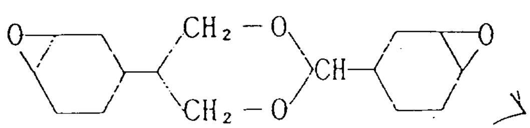

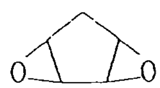

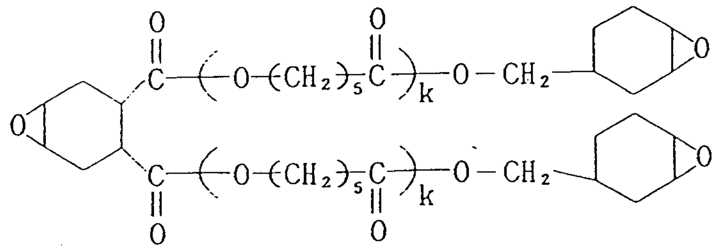

and

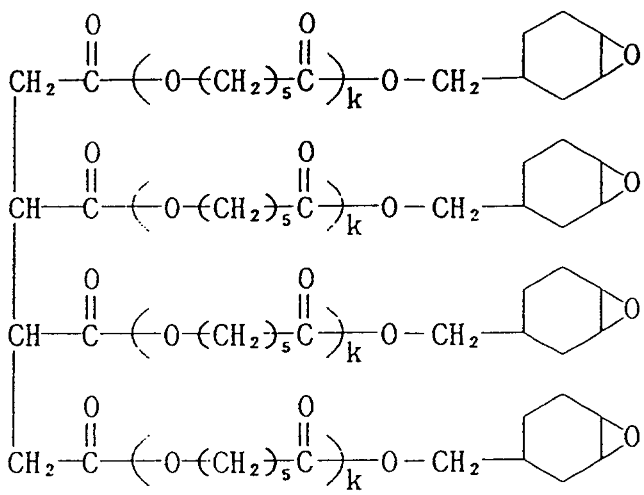

wherein k is 0 or an integer of up to 15.

6. The composition as claimed in Claim 1, wherein said polyepoxy compound is selected from compounds having repeating units represented by formulae (1), (2) and (3) below,

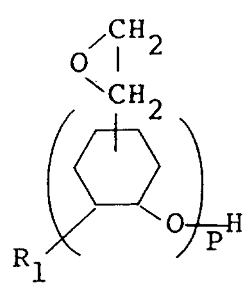

(1)

wherein $R_1$ is an organic residue having an active hydrogen, and p is 2 to 100;

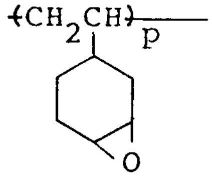

(2)

wherein p has the same meaning as defined above; and

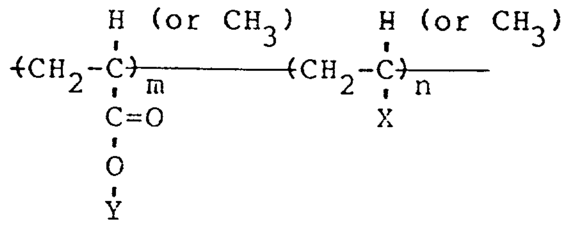

(3)

wherein Y is an alicyclic epoxy residue, X is

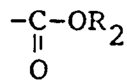,

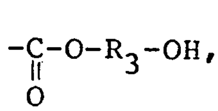, 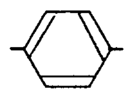, 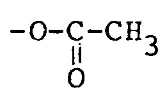,

or -O-$R_2$; $R_2$ is a $C_{1-18}$-alkyl group or a cycloalkyl group; $R_3$ is a $C_{1-6}$ alkylene group; n is 0 to 100; and m is 5 to 100.

**7.** The composition as claimed in Claim 1, wherein said alicyclic polyepoxide crosslinking agent (b) is a reaction product obtained by reacting a hydroxyl group-containing alicyclic epoxy compound having an alicyclic hydrocarbon ring and an epoxy group present on the alicyclic hydrocarbon ring and/or of an epoxy group directly bonded to a carbon atom constituting the alicyclic hydrocarbon ring, and a hydroxyl group, with a polyisocyanate compound.

**8.** The composition as claimed in Claim 7, wherein said hydroxyl group-containing alicyclic epoxy compound is selected from compounds represented y formulae (16) to (21) below:

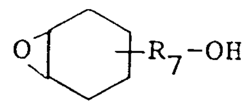 (16)

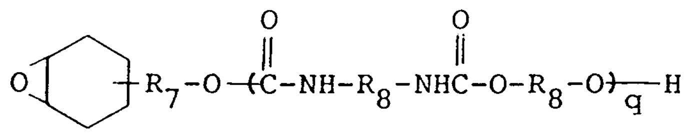 (17)

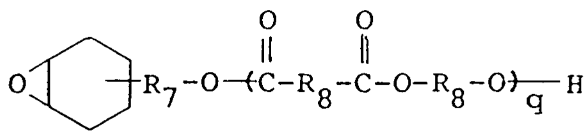 (18)

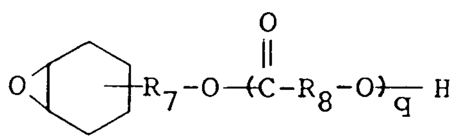 (19)

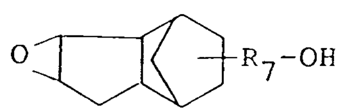 (20)

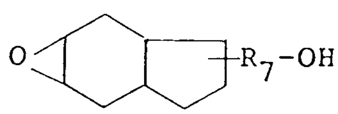 (21)

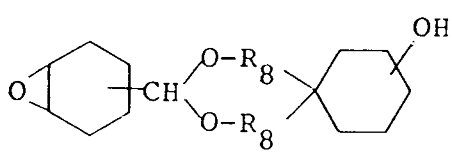 (22)

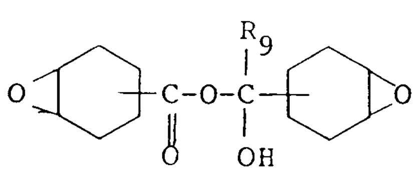 (23)

wherein $R_7$ is a divalent $C_{1-20}$-hydrocarbon group; $R_8$'s, which are the same or different, each represent a divalent $C_{1-8}$ hydrocarbon group; $R_9$ is a hydrogen atom or a methyl group; and q is an integer of 1 to 10.

9. The composition as claimed in Claim 8 , wherein said hydroxyl group-containing alicyclic epoxy compound is selected from compounds below.

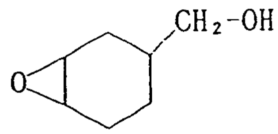

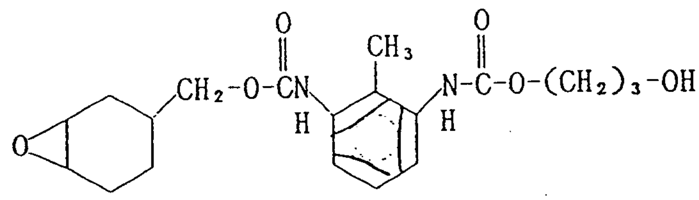

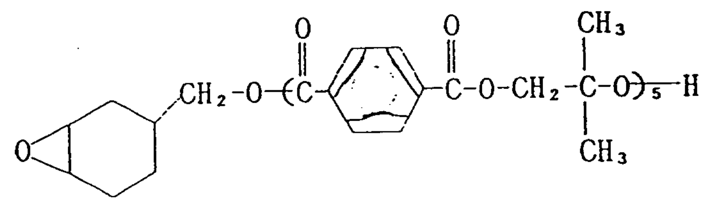

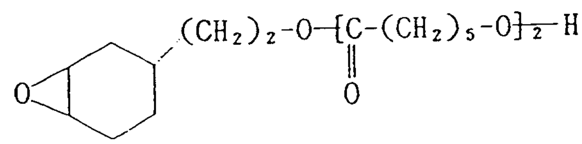

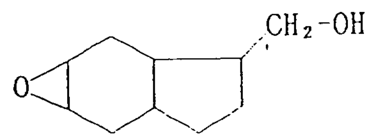

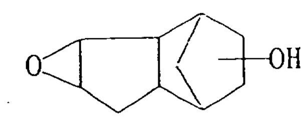

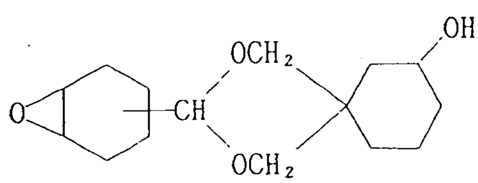

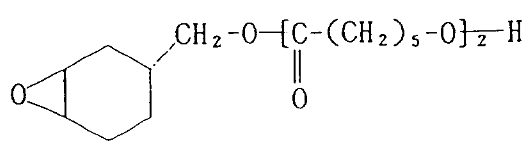

10. The composition as claimed in Claim 7, wherein said polyisocyanate compound is selected from aliphatic diisocyanate compounds, alicyclic diisocyanate compounds and aromatic-aliphatic diisocyanate compounds.

**11.** The composition as claimed in Claim 7, wherein said reaction product is selected from compounds below.

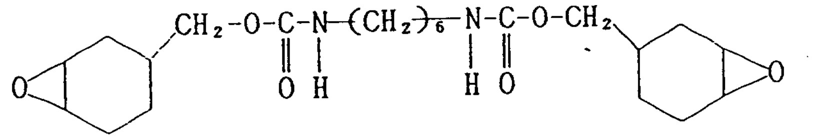

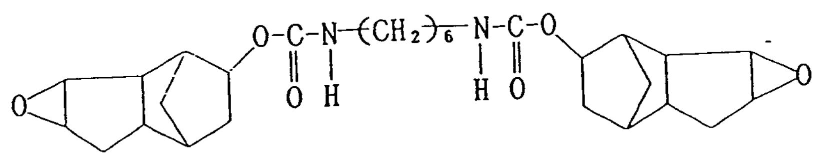

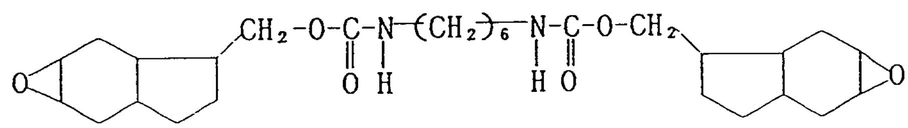

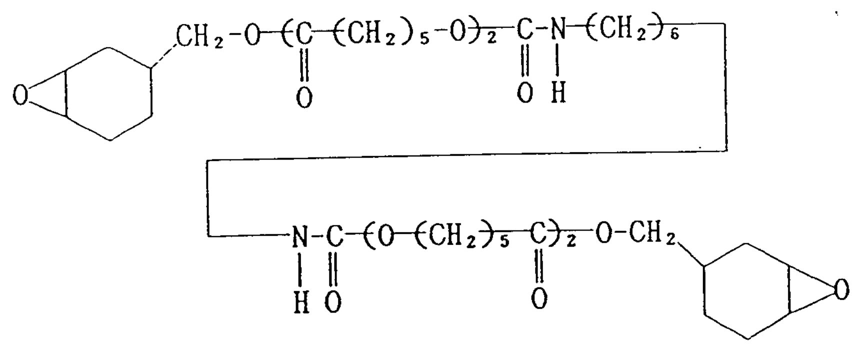

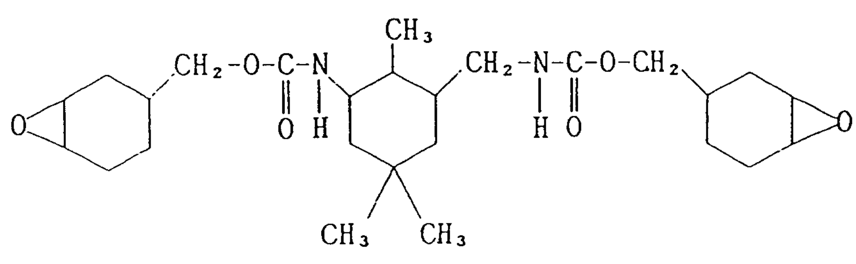

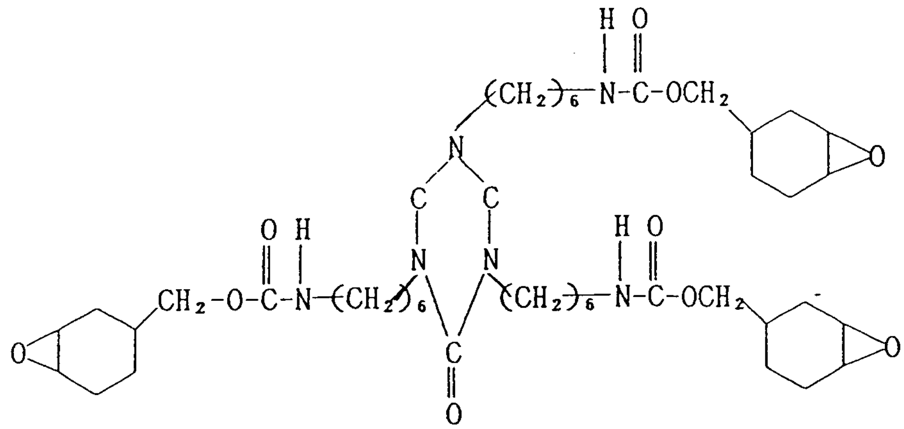

12. The composition as claimed in Claim 1, wherein said alicyclic polyepoxide crosslinking agent (b) contains on average 2 to 2,000 alicyclic epoxy groups per molecule.

13. The composition as claimed in Claim 1, wherein said alicyclic polyepoxide crosslinking agent (b) has a softenning temperature of no higher than 130 ° C.

14. The composition as claimed in Claim 1, wherein said quanternary ammonium hydroxide is a tetralkylammonium hydroxide.

15. The composition as claimed in Claim 1, wherein said composition is an organic solvent type composition in which said base resin (a), said crosslinking agent (b) and said catalyst (c) are dissolved or dispersed in an organic solvent.

16. The composition as claimed in Claim 1, wherein said composition is an aqueous composition dispersion in which said base resin (a), said crosslinking agent (b) and said catalyst (c) are dissolved or dispersed in water.

## Patentansprüche

1. Wärmehärtende Beschichtungsmasse, dadurch **gekennzeichnet,** daß sie als wesentliche Komponenten folgendes enthält:

   (a) ein Hydroxylgruppen-enthaltendes Grundharz, das sowohl Hydroxyl- als auch Carboxylgruppen enthält, mit einer Säurezahl im Bereich von 1 bis 100, einer Hydroxylzahl im Bereich von 10 bis 500 und einem zahlenmittleren Molekulargewicht im Bereich von 1.000 bis 100.000,

   (b) ein alicylisches Polyepoxid-Vernetzungsmittel, nämlich eine Polyepoxyverbindung mit einem alicyclischen Kohlenwasserstoffring, die pro Molekül mindestens zwei Gruppen von einer Epoxygruppe, die auf dem alicyclischen Kohlenwasserstoffring vorliegt, und/oder einer Epoxygruppe, die direkt an ein Kohlenstoffatom, welches einen Bestandteil des alicyclischen Kohlenwasserstoffrings darstellt, gebunden ist, aufweist,

   wobei das Grundharz (a) in einer Menge von 40 bis 97 Gew.-% und das alicyclische Polyepoxid-Vernetzungsmittel (b) in einer Menge von 3 bis 60 Gew.-%, bezogen auf die Summe aus dem Grundharz (a) und dem Vernetzungsmittel (b), vorhanden ist, und

   (c) einen Katalysator, ausgewählt aus der Gruppe bestehend aus einem quaternären Ammoniumhyroxid, nämlich einer Verbindung der Formel:

   $[R_{10}R_{11}R_{12}R_{13}N]^{\oplus}\ OH^{\ominus}$

   worin $R_{10}$, $R_{11}$, $R_{12}$ und $R_{13}$, die gleich oder verschieden sind, jeweils für eine $C_1$-$C_{18}$-Alkylgruppe, eine $C_3$-$C_7$-Cycloalkylgruppe, eine Arylgruppe oder eine Aralkylgruppe stehen,

   wobei der Katalysator (c) in einer Menge von 0,01 bis 10 Gew.-Teilen pro 100 Gew.-Teile der Summe aus dem Grundharz (a) und dem alicyclischen Polyepoxid-Vernetzungsmittel (b) enthalten

ist.

2. Masse nach Anspruch 1, dadurch **gekennzeichnet,** daß das Hydroxylgruppen-enthaltende Grundharz (a) ein Hydroxylgruppen-enthaltendes Vinylharz ist.

3. Masse nach Anspruch 1, dadurch **gekennzeichnet,** daß das Harz, welches sowohl Hydroxyl- als auch Carboxylgruppen enthält, ein Carboxylgruppen-enthaltendes Harz vom Vinyl-Typ ist.

4. Masse nach Anspruch 1, dadurch **gekennzeichnet,** daß das Grundharz (a) eine Biegerißtemperatur von nicht höher als 130 ° C besitzt.

5. Masse nach Anspruch 1, dadurch **gekennzeichnet,** daß die genannte Polyepoxyverbindung aus den unten angegebenen Verbindungen ausgewählt ist:

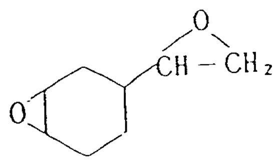

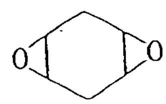

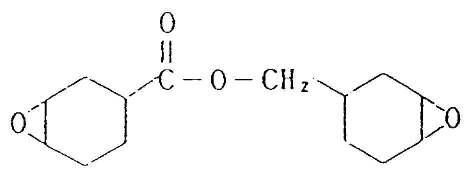

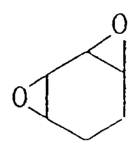

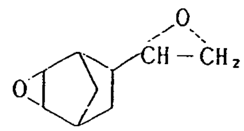
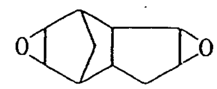

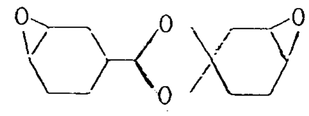
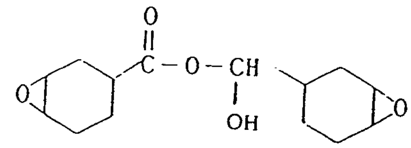

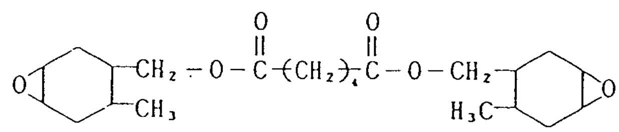

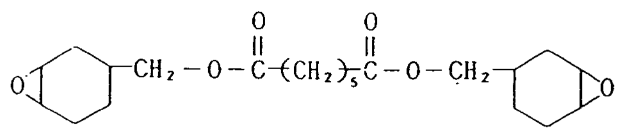

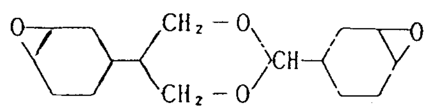
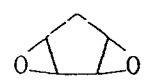

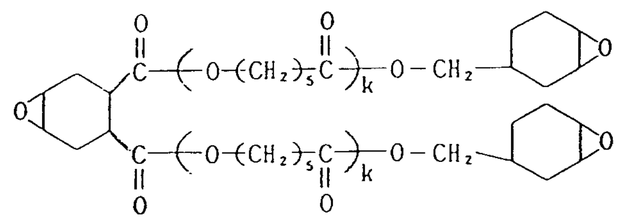

und

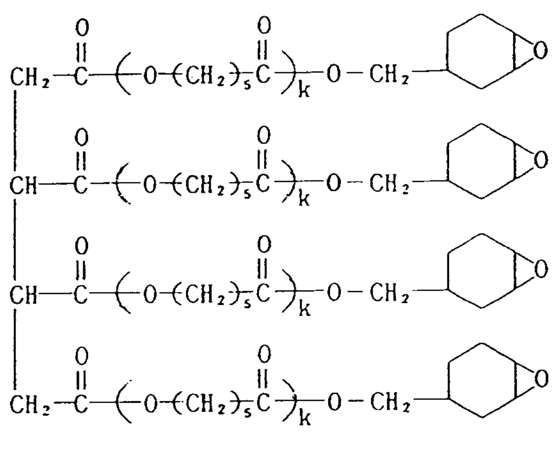

worin k den Wert 0 hat oder eine ganze Zahl von bis zu 15 ist.

6. Masse nach Anspruch 1, dadurch **gekennzeichnet,** daß die Polyepoxyverbindung aus Verbindungen mit wiederkehrenden Einheiten der folgenden Formeln (1), (2) und (3):

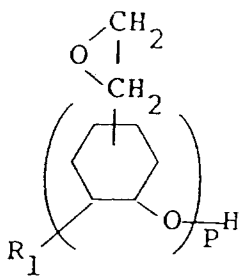

(1)

worin R für einen organischen Rest mit einem aktiven Wasserstoff steht und p 2 bis 100 ist,

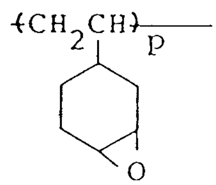

(2)

worin p die obige Bedeutung hat, und

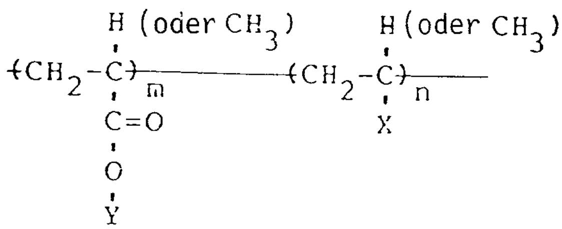

(3)

worin Y für einen alicyclischen Epoxyrest steht, X für

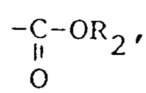

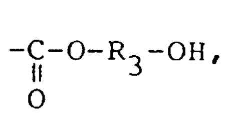, 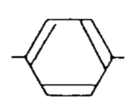, 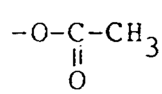

oder -O-$R_2$ steht; $R_2$ für eine $C_{1-18}$-Alkylgruppe oder eine Cycloalkylgruppe steht; $R_3$ für eine $C_{1-6}$-Alkylengruppe steht; n 0 bis 100 ist; und m 5 bis 100 ist, ausgewählt ist.

7. Masse nach Anspruch 1, dadurch **gekennzeichnet,** daß das alicyclische Polyepoxid-Vernetzungsmittel (b) ein Reaktionsprodukt, erhalten durch Umsetzung einer Hydroxylgruppen-enthaltenden alicyclischen Epoxyverbindung, die einen alicyclischen Kohlenwasserstoffring und einen auf dem alicyclischen Kohlenwasserstoffring vorhandene Epoxygruppe und/oder eine direkt an ein Kohlenstoffatom, das einen

Bestandteil des alicyclischen Kohlenwasserstoffrings bildet, gebundene Epoxygruppe und eine Hydroxylgruppe aufweist, mit einer Polyisocyanatverbindung.

**8.** Masse nach Anspruch 7, dadurch **gekennzeichnet,** daß die Hydroxylgruppen-enthaltende alicyclische Epoxyverbindung aus Verbindungen der folgenden Formeln (16) bis (21) ausgewählt ist:

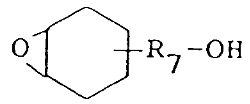

(16)

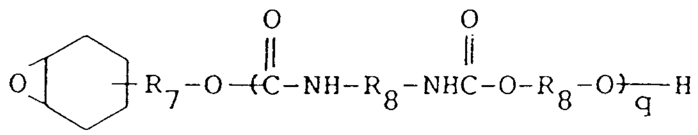

(17)

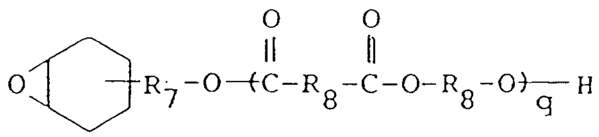

(18)

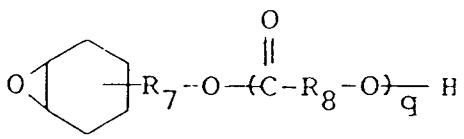

(19)

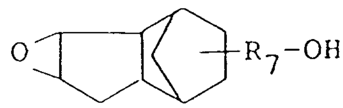

(20)

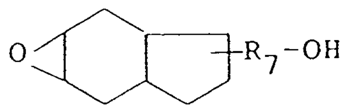

(21)

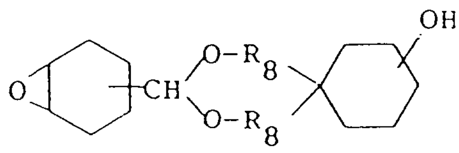

(22)

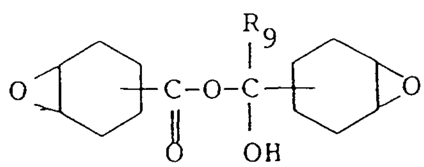

(23)

worin $R_7$ für eine zweiwertige $C_{1-20}$-Kohlenwasserstoffgruppe steht; die Gruppen $R_8$, die gleich oder verschieden sind, jeweils eine zweiwertige $C_{1-8}$-Kohlenwasserstoffgruppe sind; $R_9$ für ein Wasserstoffatom oder eine Methylgruppe steht; und q eine ganze Zahl von 1 bis 10 ist.

**9.** Masse nach Anspruch 8, dadurch **gekennzeichnet,** daß die Hydroxylgruppen-enthaltende alicyclische Epoxyverbindung aus den folgenden Verbindungen ausgewählt ist:

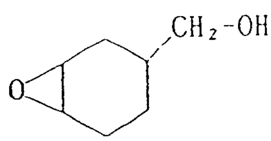

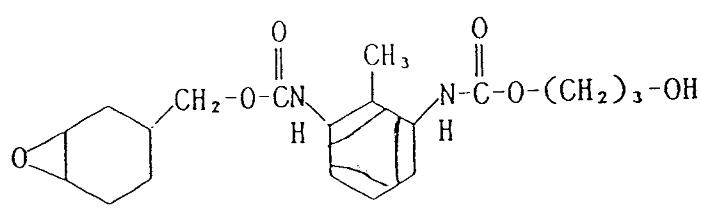

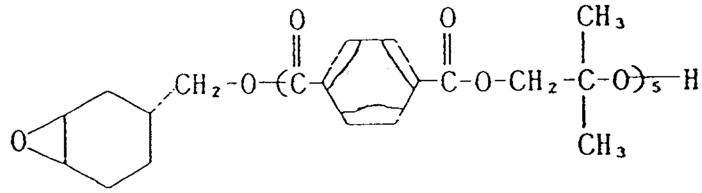

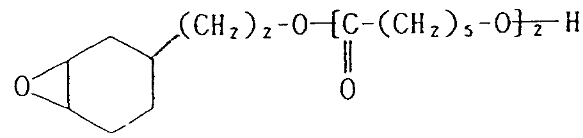

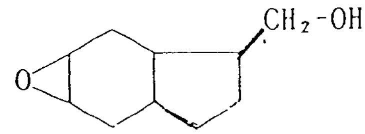

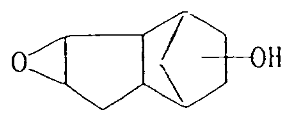

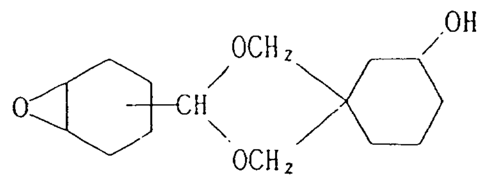

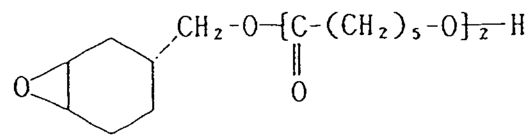

10. Masse nach Anspruch 7, dadurch **gekennzeichnet,** daß die Polyisocyanatverbindung aus aliphatischen Diisocyanatverbindungen, alicyclischen Diisocyanatverbindungen und aromatisch-aliphatischen Diisocyanatverbindungen ausgewählt ist.

11. Masse nach Anspruch 7, dadurch **gekennzeichnet,** daß das Reaktionsprodukt aus den folgenden Verbindungen ausgewählt ist:

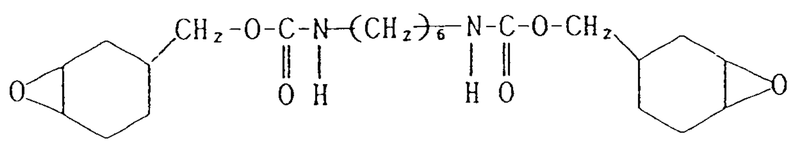

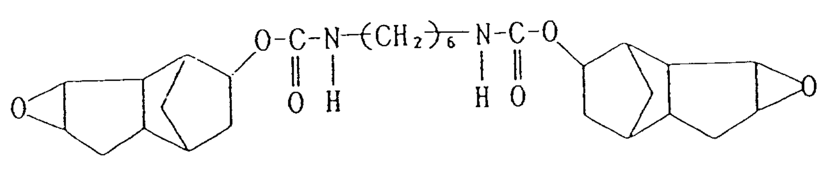

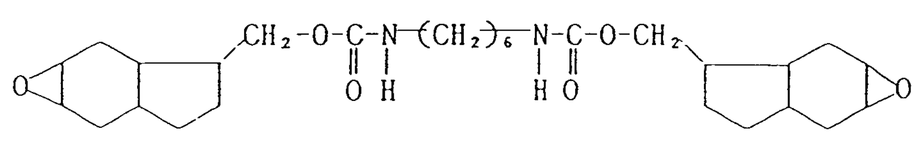

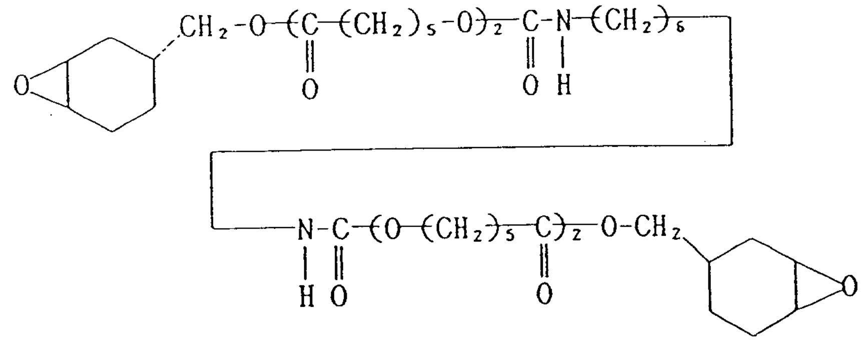

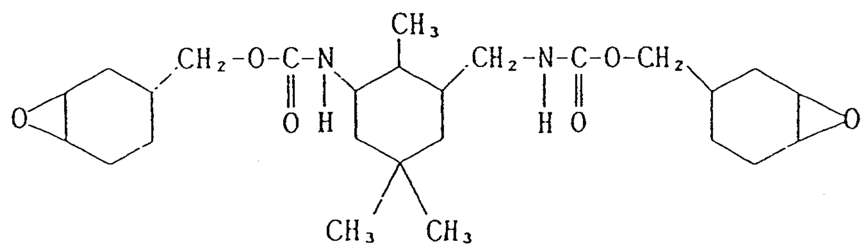

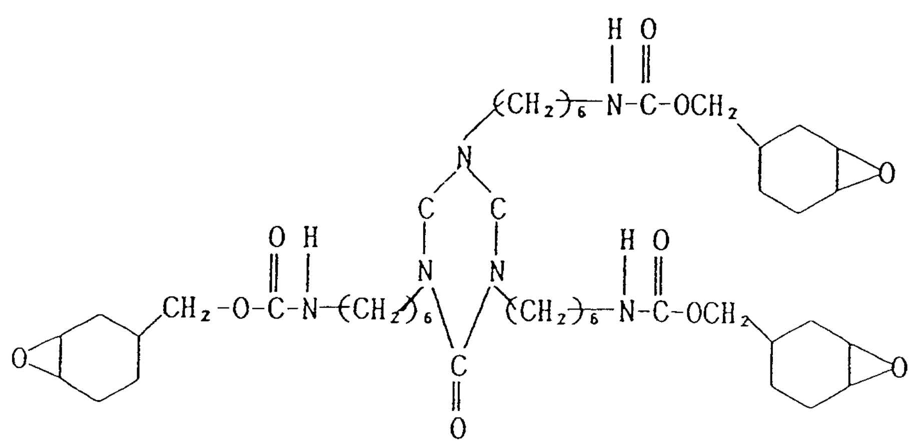

12. Masse nach Anspruch 1, dadurch **gekennzeichnet,** daß das alicyclische Polyepoxid-Vernetzungsmittel (b) im Mittel 2 bis 2.000 alicyclische Epoxygruppen pro Molekül enthält.

13. Masse nach Anspruch 1, dadurch **gekennzeichnet,** daß das alicyclische Polyepoxid-Vernetzungsmittel (b) eine Erweichungstemperatur von nicht höher als 130 °C aufweist.

14. Masse nach Anspruch 1, dadurch **gekennzeichnet,** daß das quaternäre Ammoniumhydroxid ein Tetraalkylammoniumhydroxid ist.

15. Masse nach Anspruch 1, dadurch **gekennzeichnet,** daß die Masse eine Masse vom organischen Lösungsmittel-Typ ist, wobei das Grundharz (a), das Vernetzungsmittel (b) und der Katalysator (c) in einem organischen Lösungsmittel gelöst oder dispergiert sind.

16. Masse nach Anspruch 1, dadurch **gekennzeichnet,** daß die Masse eine wäßrige Dispersion ist, bei der das Grundharz (a), das Vernetzungsmittel (b) und der Katalysator (c) in Wasser gelöst oder dispergiert sind.

## Revendications

1. Composition de revêtement durcissant à chaud comprenant comme composants essentiels :
(a) une résine de base contenant un groupe hydroxyle contenant à la fois des groupes hydroxyle et carboxyle avec un indice d'acidité compris dans un intervalle allant de 1 à 100, un indice hydroxyle compris dans un intervalle allant de 10 à 500 et une masse moléculaire moyenne en nombre comprise dans un intervalle allant de 1.000 à 100.000,
(b) un agent de réticulation de type polyépoxyde alicyclique, qui est un composé polyépoxy possédant un cycle hydrocarboné alicyclique et ayant au moins par molécule deux groupes époxy présents sur le cycle hydrocarboné alicyclique et/ou deux groupes époxy liés directement à un atome de carbone constituant le cycle hydrocarboné alicyclique,
dans laquelle ladite résine de base (a) est présente en une proportion comprise entre 40 et 97 % en poids et ledit agent de réticulation de type polyépoxyde alicyclique (b) est présent en une proportion comprise entre 3 et 60 % du poids total de ladite résine de base (a) et dudit agent de réticulation de type polyépoxyde alicyclique (b), et
(c) un catalyseur choisi dans le groupe constitué par les composés d'hydroxydes d'ammonium quaternaire de formule :

$$[R_{10}R_{11}R_{12}R_{13}N]^{\oplus}OH^{\ominus}$$

dans laquelle $R_{10}$, $R_{11}$, $R_{12}$ et $R_{13}$, qui sont identiques ou différents, représentent chacun un groupe alkyle en $C_1$-$C_{18}$, un groupe cycloalkyle en $C_3$-$C_7$, un groupe aryle ou un groupe aralkyle,
dans lequel ledit catalyseur (c) est présent en une proportion comprise entre 0,01 et 10 parties en poids pour 100 parties en poids de la somme de ladite résine de base (a) et dudit agent de réticulation de type polyépoxyde alicyclique (b).

2. Composition selon la revendication 1, dans laquelle ladite résine de base contenant un groupe hydroxyle (a) est une résine vinylique contenant un groupe hydroxyle.

3. Composition selon la revendication 1, dans laquelle ladite résine de base contenant à la fois des groupes hydroxyle et carboxyle est une résine vinylique contenant un groupe carboxyle.

4. Composition selon la revendication 1, dans laquelle ladite résine de base (a) a une température de flexion inférieure ou égale à 130 ° C.

5. Composition selon la revendication 1, dans laquelle ledit composé polyépoxy est choisi parmi les composés présentés ci-dessous

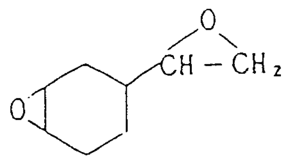 , 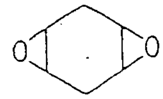 ,

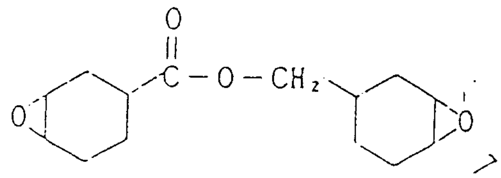 , 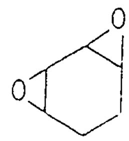 ,

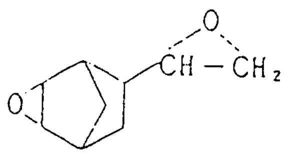 , 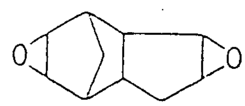 ,

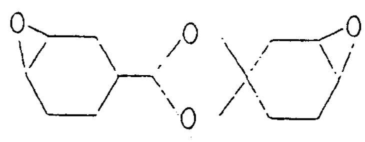 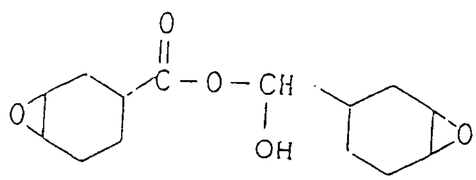

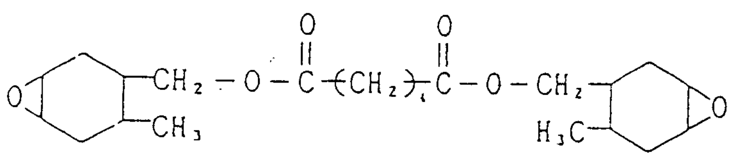 ,

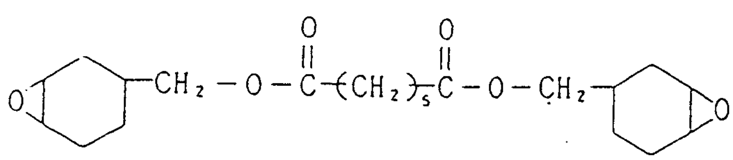 ,

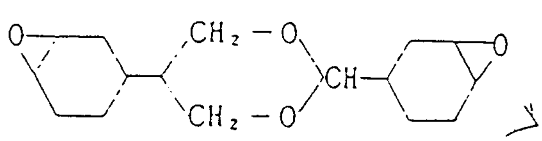 , 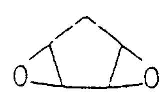 ,

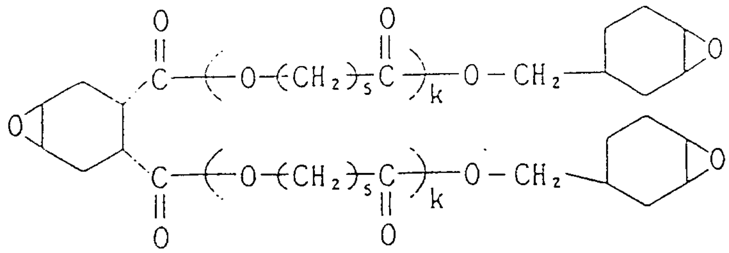

et

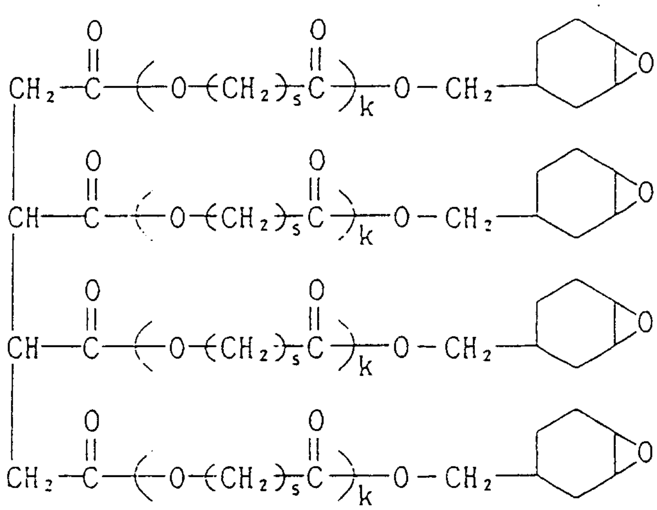

dans lesquels k vaut 0 ou est un entier inférieur ou égal à 15.

6. Composition selon la revendication 1, dans laquelle ledit composé polyépoxy est choisi parmi les composés ayant des motifs se répétant représentés par les formules (1), (2) et (3) ci-dessous,

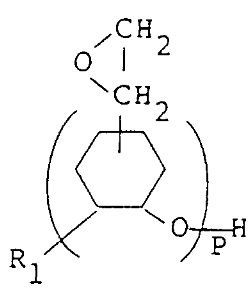

(1)

dans laquelle $R_1$ est un reste organique possédant un atome d'hydrogène actif, et p vaut de 2 à 100;

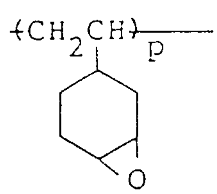

(2)

dans laquelle p a la même signification que celle définie ci-dessus ; et

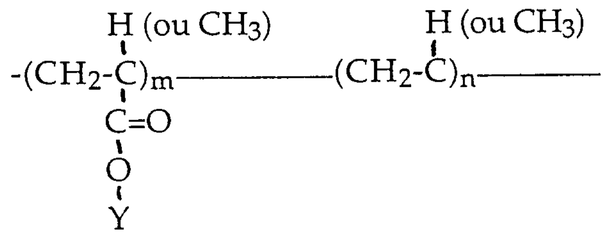 (3)

dans laquelle Y est un reste époxy alicyclique, X représente

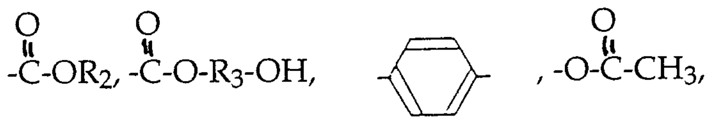

ou -O-$R_2$; $R_2$ représente un groupe alkyle en $C_{1-18}$ ou un groupe cycloalkyle; $R_3$ est un groupe alkylène en $C_{1-6}$, n vaut de 0 à 100; et m vaut de 5 à 100.

**7.** Composition selon la revendication 1, dans laquelle ledit agent de réticulation de type polyépoxyde alicyclique (b) est un produit réactionnel issu de la réaction d'un composé époxy alicyclique contenant un groupe hydroxyle ayant un cycle hydrocarboné alicyclique et un groupe époxy présent sur le cycle hydrocarboné alicyclique et/ou un groupe époxy directement lié à un atome de carbone constituant le cycle hydrocarboné alicyclique, et un groupe hydroxyle, avec un composé de type polyisocyanate.

**8.** Composition selon la revendication 7, dans laquelle ledit composé époxy alicyclique contenant un groupe hydroxyle est choisi parmi les composés représentés par les formules (16) à (21) ci-dessous :

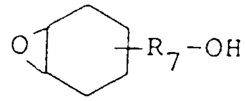 (16)

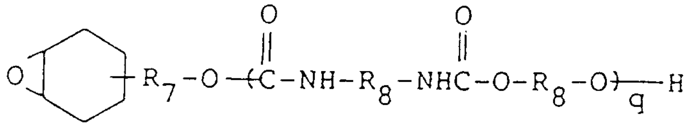 (17)

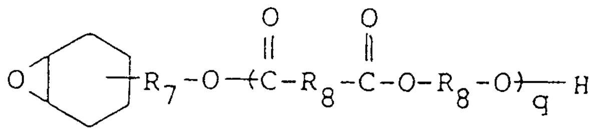 (18)

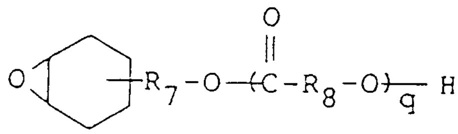 (19)

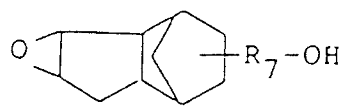 (20)

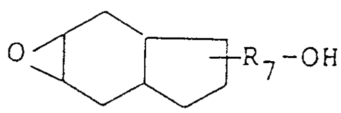 (21)

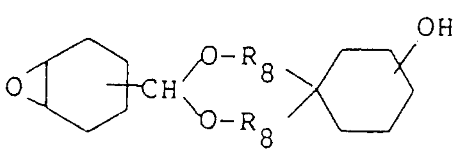 (22)

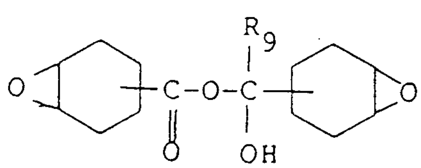 (23)

dans lesquelles $R_7$ représente un groupe hydrocarbone divalent en $C_{1-20}$ ; les groupes $R_8$, qui peuvent être identiques ou différents, représentent chacun un groupe hydrocarbone divalent en $C_{1-8}$ ; $R_9$ est un atome d'hydrogène ou un groupe méthyle ; et q représente un entier compris entre 1 et 10.

**9.** Composition selon la revendication 8, dans laquelle ledit composé époxy alicyclique contenant un groupe hydroxyle est choisi parmi les composés ci-dessous.

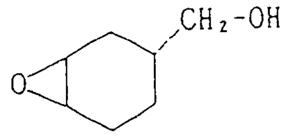

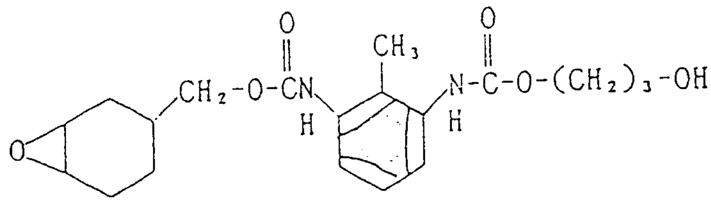

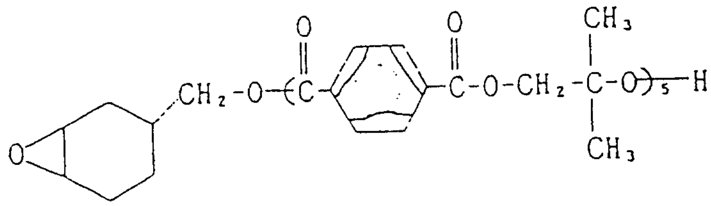

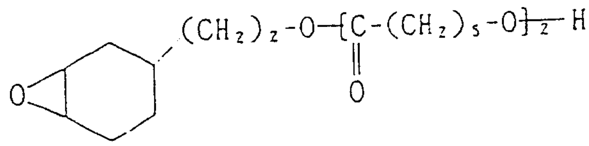

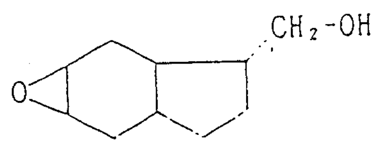

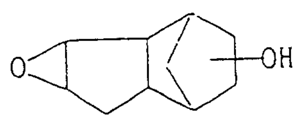

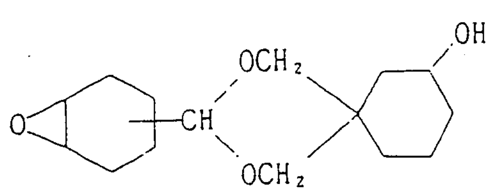

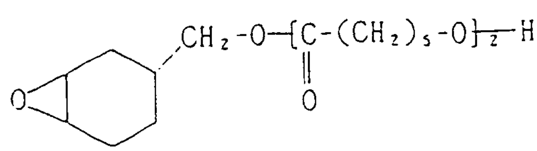

**10.** Composition selon la revendication 7, dans laquelle ledit composé de type polyisocyanate est choisi parmi des composés de diisocyanate aliphatiques, des composés de diisocyanate aromatiques et des composés de diisocyanate aliphatiques-aromatiques.

11. Composition selon la revendication 7, dans laquelle ledit produit réactionnel est choisi parmi les composés ci-dessous.

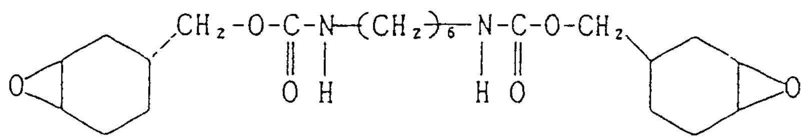

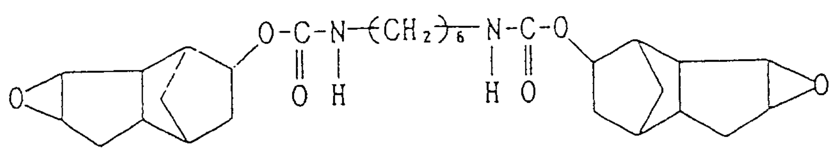

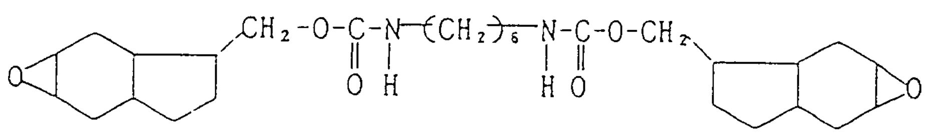

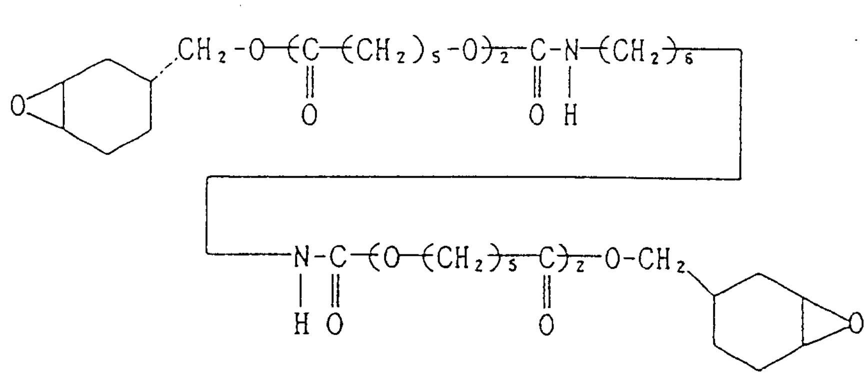

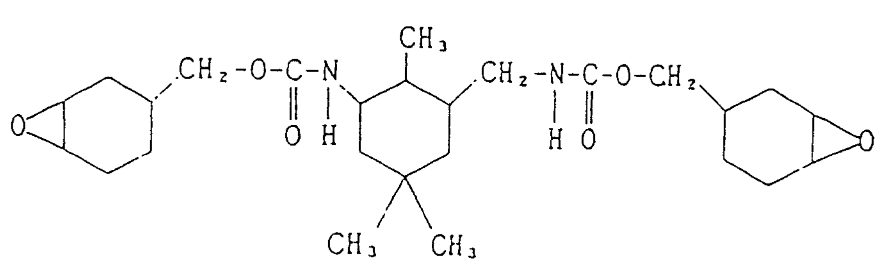

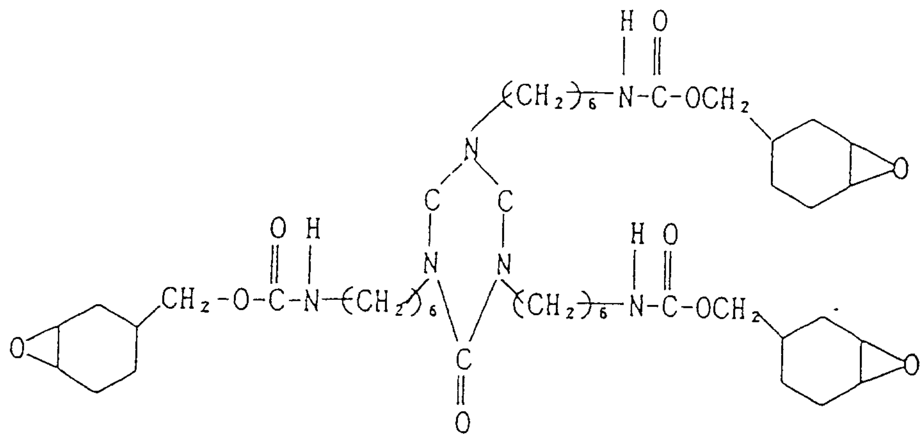

**12.** Composition selon la revendication 1, dans laquelle ledit agent de réticulation de type polyépoxyde alicyclique (b) contient en moyenne de 2 à 2.000 groupes polyépoxyde alicyclique par molécule.

**13.** Composition selon la revendication 1, dans laquelle ledit agent de réticulation de type polyépoxyde alicyclique (b) a une température de ramollissement inférieure ou égale à 130 °C.

**14.** Composition selon la revendication 1, dans laquelle ledit hydroxyde d'ammonium quaternaire est un hydroxyde de tétraalkylammonium.

**15.** Composition selon la revendication 1, dans laquelle ladite composition est une composition de type solvant organique dans laquelle ladite résine de base (a), ledit agent de réticulation (b) et ledit catalyseur (c) sont dissous ou dispersés dans un solvant organique.

**16.** Composition selon la revendication 1, dans laquelle ladite composition est une dispersion de composition aqueuse dans laquelle ladite résine de base (a), ledit agent de réticulation (b) et ledit catalyseur (c) sont dissous ou dispersés dans l'eau.